# EUROPÄISCHE PATENTSCHRIFT

(11) **EP 2 916 252 B1**
(45) Veröffentlichungstag und Bekanntmachung des Hinweises auf die Patenterteilung: **13.03.2019**
(21) Anmeldenummer: 15151075.7
(22) Anmeldetag: 14.01.2015
(51) Int. Cl.: G06F 21/31, G06Q 20/02, G06F 21/34

(54) **Elektronisches Transaktionsverfahren und Computersystem**
Electronic transaction method and computer system
Procédé de transaction électronique et système informatique

(30) Priorität: 06.03.2014 DE 102014204122
(43) Veröffentlichungstag der Anmeldung: 09.09.2015
(73) Patentinhaber: Bundesdruckerei GmbH, 10958 Berlin (DE)
(72) Erfinder: Morgner, Frank, 15537 Grünheide (DE); Dietrich, Frank, 12437 Berlin (DE); Linde, Ulrike, 13156 Berlin (DE)
(74) Vertreter: Richardt Patentanwälte PartG mbB

(56) Entgegenhaltungen:
- EP-A1- 2 696 319
- DE-B3-102011 089 580
- BSI: "Technische Richtlinie eID-Server", TECHNISCHE RICHTLINIE EID-SERVER, BUNDESAMT FÜR SICHERHEIT IN DER INFORMATIONSTECHNIK, BONN, Bd. BSI TR-03130, Nr. Version 1.0 RC1, 19. Mai 2009 (2009-05-19), Seiten 1-48, XP002598177,

## Beschreibung

Die Erfindung betrifft ein elektronisches Transaktionsverfahren sowie ein Computersystem.

Für den elektronischen Handel, das heißt den sogenannten eCommerce, sind verschiedene Transaktionsverfahren bekannt. Dazu gehören übliche Zahlungsverfahren wie zum Beispiel eine papiergebundenen Überweisung oder die Zahlung per Nachnahme sowie elektronische Zahlungsverfahren, wie zum Beispiel Kreditkartenzahlung, die Zahlung per Online-Banking, Inkasso/Billing-Systeme, Factory-Systeme, elektronische Lastschrift, Prepaidverfahren, Zahlung per Telefonrechnung sowie Handy-Payment-Systeme. Solche Zahlungsverfahren werden zum Teil auch für eGovernment Anwendungen eingesetzt.

Aus dem Stand der Technik sind für das Online-Banking ferner auf Transaktionsnummern basierte Verfahren bekannt, nämlich das sogenannte TAN-Verfahren, SMS TAN sowie das Chip-TAN-Verfahren. Hierbei muss sich der Nutzer zunächst gegenüber einem Computersystem der Bank authentifizieren, beispielsweise durch Eingabe einer Username/Passwort-Kombination. Anschließend gibt der Nutzer die Transaktionsdaten ein, wie zum Beispiel einen Überweisungsauftrag. Für die Durchführung der Transaktion ist es dann ferner erforderlich, dass der Nutzer eine zutreffende TAN von einer TAN-Liste oder zum Beispiel eine per SMS empfangene TAN in das Computersystem der Bank eingibt.

Aus der DE 10 2011 089 580 B3 ist des Weiteren ein Verfahren zum Auslesen zumindest eines in einem ID-Token gespeicherten Attributs gezeigt, wobei der ID-Token einem Nutzer zugeordnet ist.

Der Erfindung liegt demgegenüber die Aufgabe zugrunde, ein verbessertes elektronisches Transaktionsverfahren sowie ein entsprechendes Computersystem zu schaffen.

Die der Erfindung zugrunde liegende Aufgabe wird jeweils mit den Merkmalen der unabhängigen Patentansprüche erfüllt. Ausführungsformen der Erfindung sind in den abhängigen Patentansprüchen angegeben.

Unter einer "Transaktion" wird hier eine finanzielle Transaktion, wie zum Beispiel die Bezahlung eines Bezahlbetrags durch Vornahme einer Überweisung, eines Lastschrifteinzugs oder Belastung einer Kreditkarte, ein Bestellvorgang zur Bestellung und Lieferung eines physischen Gutes oder von Daten sowie andere logistische, Handels- und/oder Finanztransaktionen verstanden.

Unter einer "Session" wird hier eine temporäre Kommunikationsverbindung, das heißt eine sog. Communication Session, verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische oder asymmetrische Verschlüsselung geschützt ist.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Computersystem" wird hier ein Computersystem verstanden, welches dazu ausgebildet ist, zumindest ein Attribut aus dem ID-Token eines Nutzers auszulesen. Vorzugsweise wird das ID-Provider-Computersystem in einemsogenannten Trustcenter betrieben, um ein möglichst hohes Maß an Sicherheit zu schaffen.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Nach einer Ausführungsform der Erfindung handelt es sich bei der Anforderung, d.h. dem Request, des Dienst-Computersystems um einen SAML-Request und bei der Antwort, d.h. der Response, des ID-Provider-Computersystems hierauf um eine SAML-Response (vgl. Security Assertion Markup Language (SAML) V2.0 Technical Overview, OASIS, Committee Draft 02, 25. März 2008). Nach einer alternativen Ausführungsform stellt das ID-Provider-Computersystem einen Web-Service für das Auslesen des oder der Attribute zur Verfügung. Die Web-Service Schnittstelle dieses Web-Service kann in der Web Services Description Language (WSDL) formal beschrieben sein, wobei dann der Request von dem Dienst-Computersystem entsprechend dieser WSDL Spezifikation der Web-Service Schnittstelle erzeugt wird. Nach Ausführungsformen der Erfindung wird der Request von dem Dienst-Computersystem über das Nutzer-Computersystem an das ID-Provider-Computersystem übertragen. Aufgrund des Empfangs des Request durch das Nutzer-Computersystem wird der weitere Ablauf zur Erzeugung der Response, einschließlich der Authentisierung des Nutzers und des ID-Provider-Computersystems, ausgelöst.

Nach einer Ausführungsform der Erfindung hat das ID-Provider-Computersystem ein Zertifikat, in dem die Leserechte für die Durchführung des Lesezugriffs spezifiziert sind.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Vorzugsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Computersystem zur Durchführung des Lesezugriffs berechtigt ist. Bei diesen Attributen kann es sich um persönliche Attribute des Nutzers handeln, wie zum Beispiel seinen Namen, Wohnort und sein Alter. Diese Attribute können in ihrer Kombination als Nutzererkennung verwendet werden, um auf die Bezahlinformation des registrierten Nutzers zuzugreifen.

Alternativ oder zusätzlich kann auch ein Pseudonym des Nutzers, welches zumindest temporär als Attribut des Nutzers von dem ID-Token gespeichert wird, als Nutzerkennung verwendet werden. Bei dem Pseudonym des Nutzers kann es sich um einen Identifikator handeln, welcher den Nutzer nur gegenüber dem anfragenden Dienst-Computersystem identifiziert, da der Identifikator von dem elektronischen Personalausweis aus dem privaten Schlüssel des Personalausweis und dem öffentlichen Schlüssel des anfragenden Dienst-Computersystems kryptografisch abgeleitet wird. Ein solcher Identifikator wird im weiteren als "restricted Identifier" bezeichnet.

Ausführungsformen der Erfindung sind besonders vorteilhaft, da ein universell für eCommerce- und eGovernment-Anwendungen geeignetes computerimplementiertes Transaktionsverfahren geschaffen wird, welches gleichzeitig flexibel, bequem in der Handhabung und sicher ist. Dies wird insbesondere dadurch ermöglicht, dass das Verfahren auf einem ID-Token basiert, wobei Voraussetzung für die Durchführung einer Transaktion sowohl die Authentifizierung des Nutzers gegenüber dem ID-Token als auch die Authentifizierung des ID-Provider-Computersystems gegenüber dem ID-Token ist.

Dabei ist gegenüber dem klassischen TAN-Verfahren besonders vorteilhaft, dass die Versendung von TAN-Briefen entfallen kann. Gegenüber dem SMS-TAN-Verfahren ist von besonderem Vorteil, dass die Sicherheit gegen Manipulationen wesentlich verbessert wird. Gegenüber dem Chip-TAN-Verfahren ist von besonderem Vorteil, dass das Erfordernis eines separaten TAN-Generators entfällt. Von besonderem Vorteil ist ferner das sich Ausführungsformen der Erfindung nahtlos in eine bestehende bei Banken und Sparkassen übliche IT Struktur einfügen lassen.

Nach Ausführungsformen der Erfindung wird zunächst eine erste Session zwischen dem Internetbrowser des Nutzer-Computersystems und dem Dienst-Computersystem über das Internet aufgebaut, wobei es sich bei der ersten Session um eine http-Session oder eine https-Session handeln kann. Der Nutzer kann eine Transaktionsanforderung in den Internetbrowser eingeben, beispielsweise zur Veranlassung eines Bezahlvorgangs, wie z.B. einer online Überweisung eines Bezahlbetrags.

Das Dienst-Computersystem erzeugt daraufhin eine Anforderung, d.h. einen Request eines Request-Response Protokolls. Der Request kann eine vordefinierte oder standardisierte Struktur haben. Beispielsweise kann der Request textbasiert sein, eine XML, ASN.1 oder eine binär-Struktur aufweisen oder als SAML-Request ausgebildet sein. Der Request, beispielsweise also der SAML-Request, beinhaltet eine Attributspezifikation, welche die aus dem ID-Token für die Durchführung der Transaktion auszulesenden Attribute spezifiziert. Hierbei kann es sich um Attribute handeln, welche den Nutzer, der dem ID-Token zugeordnet ist, identifizieren und/oder die eine Bezahlinformation angeben, wie zum Beispiel eine Kontoverbindung oder Kreditkarteninformationen, und/oder Attribute, welche den ID-Token selbst betreffen, wie zum Beispiel dessen Gültigkeitsdauer, Ausstellungsdatum und/oder die ausstellende Organisation oder Behörde.

Insbesondere kann die Attributspezifikation das Geburtsdatum des Nutzers beinhalten, falls zum Beispiel die Volljährigkeit des Nutzers als Voraussetzung für die Durchführung der Transaktion von dem Dienst-Computersystem zu prüfen ist.

Der Request beinhaltet dagegen vorzugsweise keine oder keine vollständigen Transaktionsdaten zur Spezifizierung der Transaktion, das heißt zum Beispiel einen Bezahlbetrag sowie Kontoinformationen, insbesondere die Kontoverbindung des Dienst-Computersystems, auf welche die Zahlung zu leisten ist. Die Transaktionsdaten werden ganz oder teilweise zusätzlich zu dem Request von dem Dienst-Computersystem an das Nutzer-Computersystem übertragen und/oder die Transaktionsdaten werden zumindest teilweise von dem Nutzer in das Nutzer-Computersystem eingegeben. Alternativ kann der Request die Transaktionsdaten beinhalten, insbesondere auch im Klartext, oder der Request kann einen Link, z.B. eine URL, beinhalten, über den die Transaktionsdaten abrufbar sind.

Der Request kann ein Chiffrat der Transaktionsdaten beinhalten. Alternativ wird das Chiffrat von dem Nutzer-Computersystem erzeugt.

Ferner beinhaltet der Request einen Uniform Ressource Locator (URL) des ID-Provider-Computersystems, welches die Attribute aus dem ID-Token auslesen soll, sowie eine URL des Dienst-Computersystems zur Angabe eines Empfängers für die Response, die aufgrund der Request von dem ID-Provider-Computersystem zu generieren ist.

Das Dienst-Computersystem erzeugt für den Request eine Kennung, die den Request eindeutig identifiziert, wie z.B. einen globally unique identifier (GUID). Der Request beinhaltet diese Kennung.

Der Request wird von dem Dienst-Computersystem signiert, und zwar mithilfe eines privaten Schlüssels eines kryptografischen Schlüsselpaars, welches dem Dienst-Computersystem zugeordnet ist.

Aufgrund der Transaktionsanforderung wird über die erste Session der Request von dem Dienst-Computersystem an das Nutzer-Computersystem übertragen.

Das Dienst-Computersystem kann aus den Transaktionsdaten mithilfe einer Einwegfunktion das Chiffrat ableiten. Bei der Einwegfunktion kann es sich um eine Hash-Funktion, wie zum Beispiel Message-Digest-Algorithm 5 (MD5) oder einen Secure Hash Algorithm (SHA) handeln. Wesentlich ist dabei, dass die kryptografische Ableitung des Chiffrats mithilfe einer Einwegfunktion nicht reversibel ist, sodass aus dem Chiffrat nicht auf die Transaktionsdaten rückgeschlossen werden kann. Um die Sicherheit weiter zu erhöhen, können die Transaktionsdaten vor der Ableitung des Chiffrats durch eine Nonce ergänzt werden. Beispielsweise kann es sich bei der Nonce um eine Zufallszahl handeln, wobei die Zufallszahl und die Transaktionsdaten nach einem vorgegebenen Schema miteinander kombiniert, beispielsweise konkateniert, werden.

Das Chiffrat der Transaktionsdaten können als Teil des Request, oder separat davon von dem Dienst-Computersystem über die erste Session an das Nutzer-Computersystem übertragen werden. Die Transaktionsdaten selbst sind dagegen jedenfalls nicht vollständig oder gar nicht in dem Request beinhaltet und können separat von dem Request über die erste Session von dem Dienst-Computersystem an das Nutzer-Computersystem übertragen werden oder zumindest teilweise von dem Nutzer in das Nutzer-Computersystem eingegeben werden.

Alternativ kann die Ableitung des Chiffrats der Transaktionsdaten auch durch das Nutzer-Computersystem erfolgen. Hierzu empfängt das Nutzer-Computersystem die Transaktionsdaten von dem Dienst-Computersystem über die erste Session und/oder durch unmittelbare Eingabe in das Nutzer-Computersystem durch den Nutzer und leitet dann das Chiffrat mithilfe der Einwegfunktion ab.

Anschließend wird eine zweite Session von dem Internetbrowser zu dem ID-Provider-Computersystem über das Netzwerk aufgebaut.

Der Aufbau der zweiten Session erfolgt durch Aufruf der URL des ID-Provider-Computersystems, welche in dem Request beinhaltet ist. Die zweite Session wird dabei als geschützte Kommunikationsverbindung aufgebaut, und zwar mit einer verschlüsselten Transportschicht, das heißt mit Transport Layer Security (TLS), die auch als Secure Sockets Layer (SSL) bezeichnet wird, insbesondere als https-Session.

Über die zweite Session wird das Chiffrat der Transaktionsdaten und der Request von dem Nutzer-Computersystem an das ID-Provider-Computersystem weitergeleitet. Je nach Ausführungsform kann dies so erfolgen, dass das Chiffrat der Transaktionsdaten in dem Request beinhaltet ist, sodass es von dem Dienst-Computersystem signiert ist oder dass das Chiffrat zusätzlich zu dem Request über die zweite Session übertragen wird, was insbesondere dann der Fall ist, wenn das Chiffrat von dem Nutzer-Computersystem erzeugt worden ist.

Nach Ausführungsformen der Erfindung erzeugt das ID-Provider-Computersystem aufgrund des Empfangs des Requests über die zweite Session einen Identifikator für eine noch aufzubauende dritte Session, d.h. eine sog. Session-ID. Das ID-Provider-Computersystem speichert den Request sowie das zusammen mit dem Request über die zweite Session empfangene Chiffrat mit der Session-ID für die dritte Session.

Das ID-Provider-Computersystem sendet dann eine Nachricht über die zweite Session, welche eine logische Adresse des ID-Provider-Computersystems und beispielsweise auch die Session-ID der dritten Session beinhaltet. Von dieser logischen Adresse kann der Internetbrowser bzw. das Anwendungsprogramm zu einem späteren Zeitpunkt die Response auf den zuvor weitergeleiteten Request abrufen. Bei der logischen Adresse kann es sich um einen uniform resource locator (URL) handeln, von dem die Response abrufbar ist.

Anschließend wird die dritte Session auf dem Application Layer zwischen einem Programm des Nutzer-Computersystems und dem ID-Provider-Computersystem aufgebaut, und zwar über den gesicherten Transportlayer der zweiten Session. Bei dem Programm kann es sich zum Beispiel um ein Browser-Plug-in des Internet-browsers oder ein von dem Internetbrowser verschiedenes Anwendungsprogramm handeln.

Das ID-Provider-Computersystem überträgt dann diejenigen Informationen über die dritte Session an das Programm, die für das Auslesen des oder der Attribute aus dem ID-Token benötigt werden. Diese Informationen beinhalten zumindest ein Zertifikat des ID-Provider-Computersystems, welches eine Angabe von Leserechten des ID-Provider-Computersystems zum Lesen von einem oder mehrerer Attribute beinhaltet sowie die Attributspezifikation, d.h. die Angabe derjenigen Attribute, die Ausgelesen werden sollen. Zusätzlich überträgt das ID-Provider-Computersystem das Chiffrat der Transaktionsdaten z.B. über die dritte Session an das Programm.

Das Programm des Nutzer-Computersystems prüft dann, ob die in dem Zertifikat angegebenen Leserechte ausreichend sind, um einen Lesezugriff des ID-Provider-Computersystems auf das oder die gemäß der Attributspezifikation des Requests zu lesenden Attribute zuzulassen. Wenn die Leserechte des ID-Provider-Computersystems ausreichend sind, werden die folgenden weiteren Schritte durchgeführt:
a) Das Programm des Nutzer-Computersystems prüft, ob die Transaktionsdaten und das von dem ID-Provider-Computersystem über die dritte Session empfangene Chiffrat übereinstimmen. Wenn dies der Fall ist, werden die Attributspezifikation der von dem ID-Provider-Computersystem aus dem ID-Token auszulesenden Attribute sowie die Transaktionsdaten zum Beispiel auf einem Bildschirm des Nutzer-Computersystems angezeigt und der Nutzer wird zur Eingabe seiner Bestätigung aufgefordert. Unter der Voraussetzung, dass der Nutzer seine Bestätigung eingegeben hat, werden die weiteren Schritte durchgeführt; ansonsten erfolgt ein Abbruch des Vorgangs. Kryptografisch ist hierbei von Bedeutung, dass das Chiffrat, welches an die Chipkarte gesendet wird und vom ID-Provider-Computersystem in der Terminal Authentisierung signiert wird, übereinstimmt. Die Prüfung ob das Chiffrat mit den Transaktionsdaten übereinstimmt, kann wie hier beschrieben am Anfang stattfinden. Sie kann aber nach einer anderen Ausführungsform auch direkt als Teil der Terminalauthentisierung des Lesegeräts durchgeführt werden, d.h. etwas später.
b) Es wird dann eine lokale Verbindung zwischen dem Lesegerät des Nutzer-Computersystems und dem ID-Token aufgebaut. Bei einem ID-Token mit einer kontaktbehafteten Schnittstelle, beispielsweise einer Chipkarten-Schnittstelle, kann dies durch Einführen des ID-Tokens in das Lesegerät erfolgen. Bei einem ID-Token mit einer kontaktlosen Schnittstelle, wie zum Beispiel einer RFID oder einen NFC-Schnittstelle, kann dies dadurch erfolgen, dass der ID-Token auf das Lesegerät gelegt wird.
c) Der Nutzer authentifiziert sich gegenüber dem ID-Token, beispielsweise durch Eingabe seiner Personal Identification Number (PIN) oder durch Eingabe einer anderen Information, wie zum Beispiel der Erfassung eines biometrischen Merkmals des Nutzers. Bei der Authentifizierung des Nutzers gegenüber dem ID-Token wird ein Session Key vereinbart. Insbesondere kann die Vereinbarung eines Session Keys mithilfe eines Diffie-Hellman-Protokolls erfolgen.
d) Anschließend wird eine vierte Session auf dem Application Layer aufgebaut, und zwar zwischen einem Programm des ID-Tokens und dem ID-Provider-Computersystem, wobei diese vierte Session über die lokale Verbindung und die dritte Session verläuft und auf dem Application Layer eine zusätzliche Ende-zu-Ende Verschlüsselung mithilfe des in Schritt c vereinbarten Session Keys erfolgt.
e) Über die vierte Session erfolgt dann eine gegenseitige kryptografische Authentifizierung des ID-Tokens und des ID-Provider-Computersystems, beispielsweise mithilfe eines Challenge-Response-Protokolls. In die Authentifizierung des ID-Provider-Computersystems gegenüber dem ID-Token geht dabei das Chiffrat der Transaktionsdaten ein. Beispielsweise erfolgt dies so, dass eine Challenge des ID-Tokens, wie zum Beispiel eine Nonce, insbesondere eine Zufallszahl, seitens des ID-Provider-Computersystems mit dem Chiffrat der Transaktionsdaten kombiniert, wie zum Beispiel konkateniert wird. Die Kombination aus Challenge und Chiffrat wird dann von dem ID-Provider-Computersystem signiert und diese Signatur wird über die vierte Session an den ID-Token übertragen. Der ID-Token verifiziert dann die Signatur des ID-Provider-Computersystems, wobei das ID-Provider-Computersystem als authentifiziert gilt, wenn die Signatur gültig ist. Zusätzlich prüft das Programm des Nutzer-Computersystems, ob das von dem ID-Token im Rahmen der Authentifizierung empfangene Chiffrat der Transaktionsdaten mit den Transaktionsdaten der angeforderten Transaktion übereinstimmt. Dies ist eine zusätzliche Voraussetzung dafür, dass die Attribute in dem nachfolgenden Schritt f) tatsächlich aus dem ID-Token gelesen werden dürfen, da nur dann sichergestellt ist, dass die Leseanforderung des ID-Provider-Computersystems zum Lesen der Attribute gemäß der Attributspezifikation aufgrund der Transaktionsanforderung des Nutzers erfolgt.
f) Das oder die Attribute gemäß der Attributspezifikation, welche das ID-Provider-Computersystem mit dem Request empfangen hat, werden nun über die vierte Session von dem ID-Provider-Computersystem aus dem ID-Token ausgelesen. Dies setzt die erfolgreiche Authentifizierung des Nutzers in Schritt c sowie die erfolgreiche gegenseitige Authentifizierung des ID-Tokens und des ID-Provider-Computersystems in Schritt e) voraus und erfolgt verschlüsselt über die vierte Session, und zwar mit einer zusätzlichen Ende-zu-Ende Verschlüsselung z.B. mithilfe des in Schritt c) vereinbarten Session Keys auf dem Application Layer, sodass ein Maximum an Sicherheit und Vertrauenswürdigkeit hinsichtlich des oder der ausgelesenen Attribute gegeben ist.

Das ID-Provider-Computersystem erzeugt dann eine erste Transaktionsnummer für die Transaktion mithilfe eines kryptografischen Verfahrens. Bei diesem kryptografischen Verfahren kann es sich zum Beispiel um ein HASH-Verfahren oder ein anderes Verschlüsselungsverfahren handeln. In das kryptografische Verfahren können je nach Ausführungsform verschiedene Werte eingehen, nämlich beispielsweise:
i) Zur Authentifizierung des Nutzers gegenüber dem ID-Token kann zwischen dem Kartenleser und dem ID-Token ein Diffie-Hellman Schlüsselaustausch durchgeführt werden, bei dem ein ephemeraler öffentlicher Schlüssel erzeugt wird. Dieser ephemerale öffentliche Schlüssel kann zum Beispiel von dem ID-Token über die vierte Session an das ID-Provider-Computersystem übertragen werden, sodass das ID-Provider-Computersystem die erste Transaktionsnummer aus dem ephemeralen öffentlichen Schlüssel mithilfe des kryptografischen Verfahrens ableiten kann, beispielsweise durch Bildung eines HASH-Werts.
   Beispielsweise erfolgt die Authentifizierung des Nutzers gegenüber dem ID-Token mithilfe des PACE-Protokolls, wie es für den elektronischen Personalausweis der Bundesrepublik Deutschland verwendet wird. Bei dem PACE-Verfahren wird ein Diffie-Hellman Schlüsselaustausch zweimal durchgeführt.
ii) Der in dem o.g. Schritt c) vereinbarte Session Key wird von dem ID-Provider-Computersystem verwendet, um mithilfe des kryptografischen Verfahrens die erste Transaktionsnummer zu erzeugen.
iii) Von dem ID-Token wird ein Restricted Identifier erzeugt und dieser wird als Attribut von dem ID-Provider-Computersystem in dem o.g. Schritt f) aus dem ID-Token ausgelesen. Der Restricted Identifier wird mit weiteren Daten, wie zum Beispiel einem Teil der Transaktionsdaten, kombiniert, wie zum Beispiel konkateniert, sodass das ID-Provider-Computersystem aus dem Ergebnis dieser Kombination dann mithilfe des kryptografischen Verfahrens die erste Transaktionsnummer erzeugt.
iv) Das ID-Provider-Computersystem sendet in dem o.g. Schritt f) eine Kommando-APDU (APDU= Application Protocol Data Unit ist die Kommunikationseinheit z.B. nach dem ISO 7816-Standard) an den ID-Token, um das oder die Attribute auszulesen. Aufgrund der Ende-zu-Ende-Verschlüsselung wird nur der Inhalt, nicht aber der Header, der Kommando-APDU verschlüsselt, sodass das Lesegerät registriert, dass das ID-Provider-Computersystem die Kommando-APDU gesendet hat. Der ID-Token antwortet auf die Kommando-APDU des ID-Provider-Computersystems mit einer Antwort-APDU, deren Inhalt aufgrund der Ende-zu-Ende-Verschlüsselung zum Beispiel mit dem im Schritt c) vereinbarten Session Key verschlüsselt ist. Das ID-Provider-Computersystem verwendet dann den verschlüsselten Inhalt der Antwort-APDU, um daraus mithilfe des kryptografischen Verfahrens die erste Transaktionsnummer abzuleiten.
v) In dem geschützten Speicherbereich des ID-Token ist ein privater Schlüssel gespeichert. Dieser gehört zu einem asymmetrischen kryptographischen Schlüsselpaar einer public key infrastructure (PKI), d.h. dem privaten Schlüssel ist ein öffentlicher Schlüssel zugeordnet. Der öffentliche Schlüssel ist von dem Herausgeber des Schlüsselpaars signiert und wird für die Authentisierung des ID-Tokens insbesondere gegenüber dem ID-Provider-Computersystem verwendet. Dieser signierte öffentliche Chipauthentisierungsschlüssel des ID-Tokens oder die Datei, in der dieser öffentliche Schlüssel gespeichert ist, insbesondere die vollständige Datei EF.CardSecurity wie sie für den elektronsischen Personalausweis der Bundesrepublik Deutschland spezifiert ist, kann in das kryptografische Verfahren eingehen, mit dem die erste Transaktionsnummer erzeugt wird.

Je nach Ausführungsform der Erfindung können ein oder mehrere der oben unter i) bis v) genannten Eingabedaten in das kryptografische Verfahren eingehen, mit dem die erste Transaktionsnummer erzeugt wird, beispielsweise Kombinationen der oben genannten Eingabedaten.

Das ID-Provider-Computersystem erzeugt dann eine Response, beispielsweise eine SAML-Response, die die erste Transaktionsnummer sowie vorzugsweise das oder die ausgelesenen Attribute sowie das Chiffrat der Transaktionsdaten beinhaltet. Diese Response wird von dem ID-Provider-Computersystem signiert.

Die Response wird dann von dem ID-Provider-Computersystem zu dem Dienst-Computersystem übertragen, beispielsweise über das Nutzer-Computersystem oder eine andere Netzwerkverbindung. Das Dienst-Computersystem überprüft zur Verifizierung der Response deren Signatur und speichert die empfangene Response, insbesondere die erste Transaktionsnummer.

Nutzerseitig wird ebenfalls eine Transaktionsnummer erzeugt, die im Weiteren als zweite Transaktionsnummer bezeichnet wird. Die zweite Transaktionsnummer kann durch das Nutzer-Computersystem, das Lesegerät oder den ID-Token selbst erzeugt werden, wobei dasselbe kryptografische Verfahren mit demselben Eingangswert oder denselben Eingangswerten zur Anwendung kommt, wie es seitens des ID-Provider-Computersystems zur Erzeugung der ersten Transaktionsnummer der Fall ist.

In dem oben genannten Fall i) kann beispielsweise das Lesegerät oder der ID-Token die zweite Transaktionsnummer mithilfe des ephemeralen öffentlichen Schlüssels erzeugen, in dem Fall ii) und iii) erfolgt die Erzeugung der zweiten Transaktionsnummer durch den ID-Token, da weder das Lesegerät noch das Nutzer-Computersystem auf den Session Key bzw. den Restricted Identifier Zugriff haben. In dem Fall iv) schließlich erfolgt die Erzeugung der zweiten Transaktionsnummer durch das Lesegerät, und zwar mit dem verschlüsselten Inhalt der Antwort-APDU des ID-Tokens, welcher für die Durchführung des kryptografischen Verfahrens verwendet wird. Alternativ kann auch in dem Fall iv) die Erzeugung der zweiten Transaktionsnummer durch den ID-Token erfolgen.

Die nutzerseitig verwendete Einheit zur Erzeugung der zweiten Transaktionsnummer hat vorzugsweise ein Display, um die zweite Transaktionsnummer auszugeben. Beispielsweise wird die Transaktionsnummer auf dem Display angezeigt, sodass der Nutzer die zweite Transaktionsnummer von dem Display ablesen kann und zum Beispiel über die erste Session in das Dienst-Computersystem eingeben kann.

Die Übertragung der zweiten Transaktionsnummer an das Dienst-Computersystem kann alternativ automatisch erfolgen, indem der Nutzer ein Betätigungselement des Lesegeräts bzw. des ID-Tokens betätigt, woraufhin die auf dem jeweiligen Display angezeigte zweite Transaktionsnummer dann automatisch von dem Lesegerät bzw. dem ID-Token zum Beispiel über die erste Session an das Dienst-Computersystem gesendet wird.

Nach Empfang der zweiten Transaktionsnummer durch das Dienst-Computersystem greift das Dienst-Computersystem auf die zuvor gespeicherte erste Transaktionsnummer zu und prüft, ob die ersten und zweiten Transaktionsnummern übereinstimmen, das heißt, ob diese identisch sind. Ist dies der Fall, so wird die Transaktion gemäß der von dem Nutzer-Computersystem empfangenen Transaktionsanforderungen ausgeführt.

Nach Ausführungsformen der Erfindung wird der Nutzer durch das zumindest eine aus dem ID-Token ausgelesene Attribut gegenüber dem Dienst-Computersystem eindeutig identifiziert. Bei diesem Attribut kann es sich zum Beispiel um den Restricted Identifier handeln oder zum Beispiel um die Attribute Name, Vorname, Geburtsdatum und Wohnort. Aufgrund dieses zumindest einen den Nutzer identifizierenden Attributs, welches in der Response neben der ersten Transaktionsnummer beinhaltet ist, ordnet das Dienst-Computersystem die zweite Transaktionsnummer der Transaktionsanforderung zu, welche das Dienst-Computersystem zuvor von demselben Nutzer über das Netzwerk empfangen hatte. Die Zuordnung der zweiten Transaktionsnummer zu dieser Transaktionsanforderung kann erfolgen, indem die zweite Transaktionsanforderung über dieselbe erste Session übertragen wird, über welche auch die initiale Transaktionsanforderung an das Dienst-Computersystem gesendet wurde.

Aufgrund des Empfangs der für die angeforderte Transaktion benötigten Attribute aus dem ID-Token des Nutzers wird die Transaktion dann von dem Dienst-Computersystem ausgeführt.

Ausführungsformen der Erfindung sind besonders vorteilhaft, da das Auslesen der Attribute aus dem ID-Token durch das ID-Provider-Computersystem die Authentizität der ausgelesenen Attribute gewährleistet und gleichzeitig die Zustimmung des Nutzers zu dem Auslesen der Attribute für den Zweck der Durchführung einer bestimmten von dem Nutzer ausdrücklich genehmigten Transaktion erforderlich ist.

Mit anderen Worten besteht für den Nutzer die Sicherheit, dass er das Auslesen der Attribute durch das ID-Provider-Computersystem nur für den Zweck der zuvor angeforderten Transaktion zulässt, ohne dass das ID-Provider-Computersystem Kenntnis von den vollständigen Transaktionsdaten haben muss. Letzteres ist besonders vorteilhaft im Hinblick auf den Schutz der Privatsphäre, da es auf diese Art und Weise bereits technisch ausgeschlossen wird, dass durch das ID-Provider-Computersystem eine Historie der von dem Nutzer vorgenommenen Transaktionen aufgezeichnet wird.

Ein weiterer Vorteil ist, dass der ID-Token die ausgelesenen Attribute nicht signieren muss. Zwar hat beispielsweise der neue elektronische Personalausweis der Bundesrepublik Deutschland eine Signaturfunktion. Die Nutzung dieser Signaturfunktion erfordert allerdings, dass kryptografisches Schlüsselmaterial für die Nutzung der Signaturfunktion in dem elektronischen Personalausweis vorhanden sein muss, was einen entsprechenden technischen und Kostenaufwand bedeutet, welcher nicht von allen Nutzern akzeptiert wird. Insbesondere wird durch die Erfindung auch für eine nur gelegentliche Nutzung des ID-Tokens für die Durchführung von Transaktionen eine effiziente und zugleich sehr sichere Anwendung geschaffen.

Nach Ausführungsformen der Erfindung wird aus dem ID-Token durch das ID-Provider-Computersystem nur ein Pseudonym des Nutzers, d.h. der restricted Identifier, ausgelesen. Nach Empfang der Response von dem ID-Provider-Computersystem verwendet das Dienst-Computersystem das Pseudonym des Nutzers als Zugriffsschlüssel zum Zugriff auf ein Nutzerprofil dieses Nutzers, um die in einer Datenbank, zum Beispiel des Dienst-Computersystems gespeicherten Attribute des Nutzers auszulesen, wie zum Beispiel dessen Name, Adresse und Kontoverbindung.

Nach einer Ausführungsform der Erfindung beinhaltet die Response des ID-Provider-Computersystems das Chiffrat der Transaktionsdaten, wobei die Response von dem ID-Provider-Computersystem signiert ist. Das Dienst-Computersystem ordnet die von dem ID-Provider-Computersystem empfangene Response der zuvor von dem Nutzer empfangenen Transaktionsanforderung zu, indem das Chiffrat der Transaktionsdaten der Transaktionsanforderung mit dem in der Response beinhalteten Chiffrat abgeglichen wird; wenn beide Chiffrate miteinander übereinstimmen, so bedeutet dies, dass sich die empfangene Response auf die betreffende Transaktionsanforderung des Nutzers bezieht.

Nach einer Ausführungsform der Erfindung hat das Nutzer-Computersystem einen Kartenleser mit einem Display, wie zum Beispiel einen sogenannten Klasse 2- oder Klasse 3-Kartenleser. Das Programm des Nutzer-Computersystems übermittelt die Transaktionsdaten vor der Nutzer-Authentifizierung an den Kartenleser. Der Kartenleser zeigt die Transaktionsdaten an, sodass sie von dem Benutzer überprüft werden können. Anschließend kann der Nutzer seine Authentifizierungsdaten, wie zum Beispiel seine PIN, in den Kartenleser eingeben, um hierdurch (i) die Transaktionsdaten zu bestätigen und sich (ii) gegenüber dem ID-Token zu authentifizieren.

Nach einer Ausführungsform der Erfindung stellt der Kartenleser bei der TerminalAuthentifizierung des ID-Provider-Computersystems gegenüber dem ID-Token sicher, dass das korrekte Chiffrat der Transaktionsdaten von dem ID-Provider-Computersystem an den ID-Token geschickt wird, indem der Kartenleser die zuvor von dem Programm des Nutzer-Computersystems empfangenen Transaktionsdaten mit dem Chiffrat der Transaktionsdaten, welche der Kartenleser von dem ID-Server-Computersystem empfangen hat, abgleicht, beispielsweise indem der Kartenleser aus den Transaktionsdaten seinerseits deren Chiffrat bildet, um dieses Chiffrat mit dem von dem ID-Server-Computersystem empfangenen Chiffrat auf Übereinstimmung zu prüfen.

Nach einer weiteren Ausführungsform der Erfindung werden die Transaktionsdaten von dem Programm des Nutzer-Computersystems an das ID-Token über den Kartenleser übertragen und dort temporär gespeichert. Vor der Authentifizierung des Nutzers gegenüber dem ID-Token werden die Transaktionsdaten auf einem Display des ID-Tokens angezeigt. Durch nachfolgende Eingabe seiner Authentisierungsdaten bestätigt der Nutzer wiederum i) die Transaktionsdaten und ii) authentifiziert sich gleichzeitig gegenüber dem ID-Token.

Nach einer Ausführungsform der Erfindung prüft der ID-Token die Korrektheit des Chiffrats, welches es im Rahmen der Terminalauthentifizierung von dem ID-Server-Computersystem empfängt, indem das ID-Token die von dem Programm des Nutzer-Computersystems empfangenen Transaktionsdaten mithilfe der Einwegfunktion chiffriert und das daraus resultierende Chiffrat mit dem von dem ID-Server-Computersystem empfangene Chiffrat auf Übereinstimmung prüft. Falls keine Übereinstimmung vorliegt, wird der Vorgang an dieser Stelle abgebrochen und es kommt zu einer Fehlermeldung. Dadurch ist ein besonders wirksamer Schutz gegen Schadsoftware, insbesondere sog. Trojaner, gegeben, da die Prüfung auf dem ID-Token selbst erfolgt.

Nach einer Ausführungsform der Erfindung sendet das ID-Provider-Computersystem die Response über das Programm des Nutzer-Computersystems an das Dienst-Computersystem, das heißt über die Session 2 oder 3 und die Session 1. Dies hat den Vorteil, dass das Dienst-Computersystem keinen Zustand über die ausgelösten Transaktionen halten muss.

Nach einer Ausführungsform der Erfindung handelt es sich bei dem Programm des Nutzer-Computersystems um ein Browser-Plug-in des Internetbrowsers, wobei es sich bei dem Internetbrowser um ein übliches Browserprogramm, wie zum Beispiel Microsoft Internet Explorer, Safari, Google Chrome oder Firefox handeln kann. Alternativ kann es sich bei dem Programm des Nutzer-Computersystems um ein von dem Internetbrowser separates Anwendungsprogramm handeln.

Im Weiteren werden Ausführungsformen der Erfindung mit Bezugnahme auf die Zeichnungen näher erläutert.

Es zeigen:
- Fig. 1: ein Blockdiagramm einer Ausführungsform eines erfindungsgemäßen ID-Tokens,
- Fig. 2: eine Anordnung einer Ausführungsform eines erfindungsgemäßen Computersystems zur Durchführung einer Ausführungsform eines erfindungsgemäßen Verfahrens.

Elemente der Ausführungsformen der nachfolgenden Figuren, die zueinander identisch sind oder einander entsprechen, sind jeweils mit denselben Bezugszeichen gekennzeichnet.

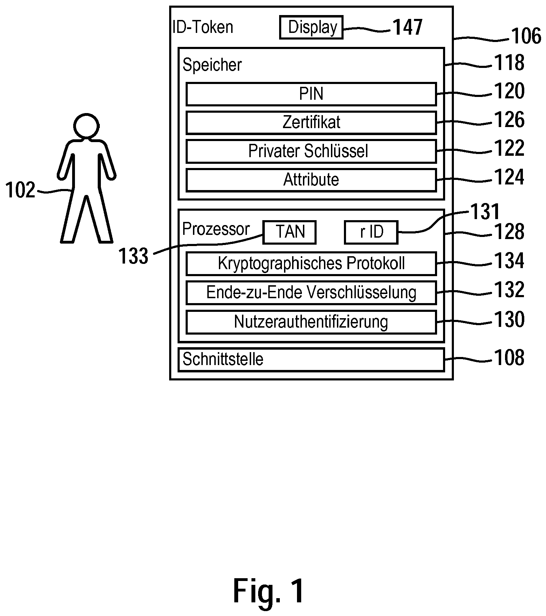

Die Figur 1 zeigt einen ID-Token 106, bei dem es sich zum Beispiel um einen elektronischen Personalausweis handeln kann.

Der geschützte Speicherbereich 120 des ID-Token 106 dient zur Speicherung eines Referenzwerts, der für die Authentifizierung eines Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Alternativ erfolgt die Authentifizierung des Nutzers gegenüber dem ID-Token mittels einer sog. Fernüberprüfung, wie sie z.B. in DE 102007000587 A1, DE 10 2009 000 408 A1 veröffentlicht ist, insbesondere mit einem Diffie-Hellman Schlüsselaustausch, insbesondere nach dem PACE Verfahren.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

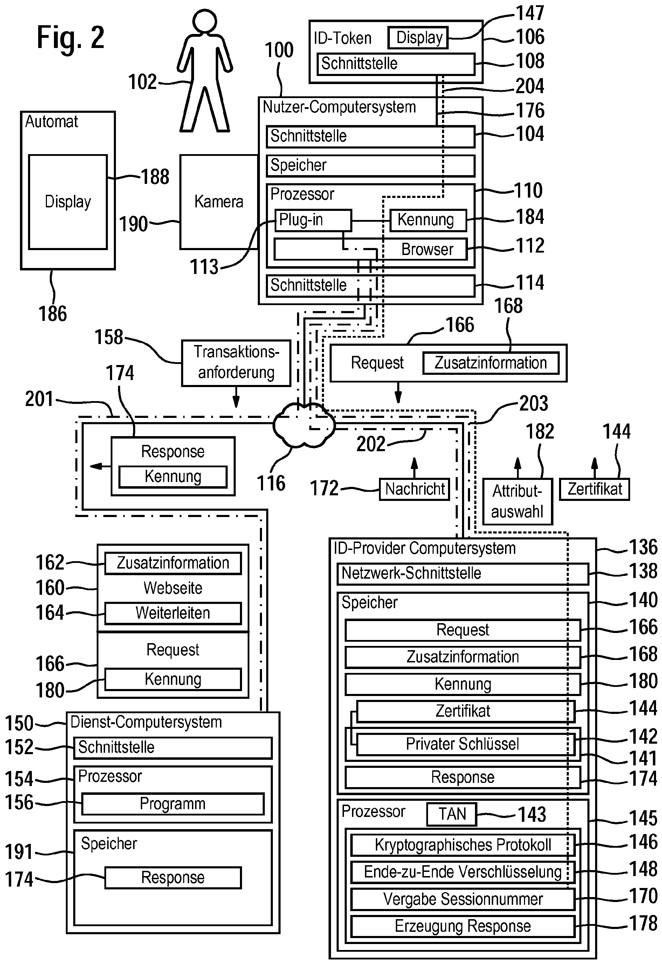

Die Programminstruktionen 132 dienen zur Ende-zu-Ende-Verschlüsselung von zwischen dem ID-Token 106 und einem ID-Provider-Computersystem 136 (vgl. Fig. 2) übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Der ID-Token 106 hat eine Schnittstelle 108 zur Kommunikation mit einer entsprechenden Schnittstelle 104 eines Nutzer-Computersystems 100 (vergleiche Figur 2). Die Schnittstelle kann kontaktlos oder kontaktbehaftet ausgebildet sein. Insbesondere kann es sich um eine RFID- oder um eine NFC-Kommunikationsschnittstelle handeln eines Lesegeräts des Nutzer-Computersystems 100 handeln. Das Lesegerät kann einen integralen Bestandteil des Nutzer-Computersystems 100 bilden oder als Peripheriegerät ausgebildet sein.

Der Zugriff auf den geschützten Speicherbereich 124 zum Lesen einer oder mehrerer der Attribute kann nur über den Prozessor 128 des ID-Tokens 106 erfolgen, da der geschützte Speicherbereich 124 sowie auch die weiteren geschützten Speicherbereiche 120, 122 nicht unmittelbar zum Beispiel über ein Bussystem mit der Schnittstelle 108 verbunden sind, sondern nur mit dem Prozessor 128, das heißt ein Zugriff über die Schnittstelle 108 unmittelbar auf den geschützten Speicherbereich 124 ist bereits schaltungstechnisch ausgeschlossen. Allein der Prozessor 128 kann also lesend auf den geschützten Speicherbereich 124 zugreifen, um dann gegebenenfalls die ausgelesenen Attribute über die Schnittstelle 108 auszugeben.

Der Prozessor 128 kann ferner zur Ausführung von Programminstruktionen 131 für die Erzeugung des restricted Identifiers des Nutzers 102 ausgebildet sein. Ferner kann der Prozessor 128 zur Ausführung von Programminstruktionen 133 für die Erzeugung der zweiten Transaktionsnummer ausgebildet sein.

Die Figur 2 zeigt ein Nutzer-Computersystem 100 des Nutzers 102. Bei dem Nutzer-Computersystem 100 kann es sich um einen Personal-Computer (PC), einen tragbaren Computer, wie zum Beispiel einen Laptop, Notebook oder Tablet-Computer, ein mobiles Telekommunikationsgerät, insbesondere ein Smartphone handeln.

Das Nutzer-Computersystem hat zumindest einen Prozessor 110 zur Ausführung eines Anwendungsprogramms 112. Das Anwendungsprogramm 112 ist dazu ausgebildet, über eine Netzwerk-Schnittstelle 114 des Nutzer-Computersystems 100 über ein Netzwerk 116 zu kommunizieren. Beispielsweise handelt es sich bei dem Anwendungsprogramm um einen Internet-Browser oder ein anderes spezialisiertes Anwendungsprogramm, welches über das Netzwerk 116 kommunizieren kann, insbesondere ein html-fähiges Anwendungsprogramm.

Der Prozessor 110 dient zur Ausführung eines weiteren Programms 113, bei dem es sich beispielsweise um ein Plug-in für das Anwendungsprogramm 112 handeln kann, beispielsweise um ein Browser-Plug-in, wenn das Anwendungsprogramm 112 als Internet-Browser ausgebildet ist, oder um ein von dem Anwendungsprogramm separates Programm.

Bei dem Netzwerk kann es sich um ein Computernetzwerk, wie zum Beispiel das Internet, handeln. Insbesondere kann das Netzwerk 116 auch ein Mobilfunknetzwerk beinhalten.

Das ID-Provider-Computersystem 136 hat eine Netzwerk-Schnittstelle 138 zur Kommunikation über das Netzwerk 116. Das ID-Provider-Computersystem 136 hat ferner einen Speicher 140 mit einem geschützten Speicherbereich 141, in dem ein privater Schlüssel 142 des ID-Provider-Computersystems 136 gespeichert ist, sowie auch das entsprechende Zertifikat 144. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist, d.h. dem sog. session key. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Transaktionsanforderung ausgebildet sein. Beispielsweise kann der Nutzer 102 online über das Netzwerk 116 ein Konto bei einer Bank eröffnen oder eine andere Finanz- oder Bankdienstleistung in Anspruch nehmen.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Transaktionsanforderung eingeben kann

Je nach der Art der Transaktionsanforderung muss das Dienst-Computersystem 150 ein oder mehrere Attribute des Nutzers 102 und/oder dessen ID-Token 106 verarbeiten.

Zur Durchführung einer elektronischen Transaktion kann wie folgt vorgegangen werden:
- Der Nutzer 102 startet das Anwendungsprogramm 112 des Nutzer-Computersystems, wobei im Weiteren ohne Beschränkung der Allgemeinheit davon ausgegangen wird, dass es sich hierbei um einen Internet-Browser handelt. Der Nutzer 102 gibt eine URL des Dienst-Computersystems 150 in den Internet-Browser ein, so dass daraufhin eine erste Session 201 zwischen dem Internet-Browser 112 und dem Dienst-Computersystem 150 über das Netzwerk 116 aufgebaut wird. Der Nutzer kann dann über die erste Session 201 einen von dem Dienst-Computersystem 150 angebotenen Dienst anfordern, wie zum Beispiel die Durchführung einer finanziellen Transaktion anfordern. Hierzu wird von dem Internet-Browser 112 eine entsprechende Transaktionsanforderung 158 an das Dienst-Computersystem 150 gesendet, die diese Anforderung signalisiert.
- Das Dienst-Computersystem empfängt also von dem Internet-Browser über die erste Session eine Transaktionsanforderung 158 des Nutzers 102, die Transaktionsdaten beinhaltet.
- Aufgrund des Empfangs der Transaktionsforderung 158 über die erste Session 201 erzeugt das Dienst-Computersystem 150 einen Request 166. Der Request 166 beinhaltet (i) eine Attributspezifikation, des oder der aus dem ID-Token für die Durchführung der Transaktion auszulesenden Attribute. Bei diesen Attributen kann es sich um persönliche Angaben zu dem Nutzer 102 und/oder Daten betreffend den ID-Token 106 selbst oder ein Pseudonym des Nutzers 102, welches von dem ID-Token 106 verfügbar ist, d.h. den restricted identifier (rID) handeln. Der Request beinhaltet ferner (ii) die Transaktionsdaten zur Spezifizierung der Transaktion, wie zum Beispiel einen Bezahlbetrag, der für den Kauf des bestellten Produkts oder die Durchführung des bestellten Dienstes an das Dienst-Computersystem 150 oder einen Dritten zu entrichten ist und/oder andere Transaktionsdaten, die die durchzuführende Transaktion spezifizieren. Der Request beinhaltet ferner (iii) eine Kennung 180 des Requests, beispielsweise eine GUID, die für das sogenannte Binding des Requests und einer daraufhin empfangenen Response 174 erforderlich sein kann. Für die Erzeugung der Kennung kann das Dienst-Computersystem 150 einen GUID-Generator aufweisen. Die Request beinhaltet ferner (iv) eine URL des ID-Provider-Computersystems 136 (v) eine URL des Dienst-Computersystems 150 selbst und ein Chiffrat der Transaktionsdaten, wobei das Dienst-Computersystem 150 das Chiffrat mit Hilfe einer vorgegebenen Einwegfunktion, z.B. einer HASH-Funktion ableitet. Alternativ beinhaltet der Request die Transaktionsdaten jedenfalls nicht vollständig im Klartext, sondern nur das Chiffrat der Transaktionsdaten. In diesem Fall werden die Transaktionsdaten separat zu dem Request von dem Dienst-Computersystem an das Nuzter-Computersystem über die erste Session 201 übertragen, z.B. als Parameter einer lokalen URL, wenn es sich bei dem Programm 113 um ein von dem Internet-Browser 112 separates Anwendungsprogramm handelt, wie zum Beispiel eine sogenannte Bürger-App oder Ausweis-App. Dieses Anwendungsprogramm 113 wird von dem Internet-Browser 112 durch Aufruf der lokalen URL gestartet, wobei die lokale URL eine fest vorgegebener Portnummer gemäß dem TCP-Protokoll beinhaltet, wobei die Transaktionsdaten als Parameter der lokalen URL hierbei and das Programm 113 übergeben werden.
- Der Request wird von dem Dienst-Computersystem 150 signiert, nämlich mit Hilfe eines privaten Schlüssels des Dienst-Computersystems 150. Bei dem Request 166 kann es sich um einen SAML-Request oder einen anderen Request eines Request-Response-Protokolls handeln.
- Als Antwort auf die Transaktionsanforderung 158 sendet dann das Dienst-Computersystem 150 eine Webseite 160 über die erste Session 201 an das Nutzer-Computersystem 100, wobei die Webseite 160 die lokale URL beinhalten kann.
- Aufgrund des Empfangs der Webseite 160 und des Requests 166 wird die Webseite 160 durch den Internet-Browser 112 wiedergegeben. Beispielsweise durch Selektion der lokalen URL, z.B. durch Anklicken, wird das Programm 113 gestartet.
- Anschließend wird eine zweite Session 202 zwischen dem Internet-Browser 112 und dem ID-Provider-Computersystem 136 über das Netzwerk 116 aufgebaut, und zwar mit Hilfe der URL des ID-Provider-Computersystems 136, die das Nutzer-Computersystem 100 mit dem Request 166 empfangen hat. Die zweite Session 202 wird mit einem gesicherten Transportlayer aufgebaut, beispielsweise als https-Session.
- Über die zweite Session 202 wird der Request 166 von dem Nutzer-Computersystem 100 an das ID-Provider-Computersystem 136 weitergeleitet.
- Aufgrund des Empfangs des Requests 166 durch das ID-Provider-Computersystem 136 erzeugt dieses durch Ausführen seiner Programminstruktionen 170 eine Session-ID für eine noch aufzubauende dritte Session 203. Der Request 166 wird in dem Speicher 140 des ID-Provider-Computersystems 136 gespeichert.
- Das ID-Provider-Computersystem 136 generiert dann eine Nachricht 172, die die Session-ID für den Aufbau der dritten Session 203 und eine logische Adresse beinhaltet. Mit Hilfe der logischen Adresse kann die von dem ID-Provider-Computersystem 136 aufgrund des Request 166 zu erzeugende Response 174 abgerufen werden. Insbesondere kann die logische Adresse als eine URL ausgebildet sein. Die Nachricht 172 wird über die zweite Session 202 von dem ID-Provider-Computersystem 136 an den Internet-Browser 112 gesendet.
- Aufgrund des Empfangs der Nachricht 172 wird die dritte Session 203 zwischen dem Programm 113 des Nutzer-Computersystems 100 und dem ID-Provider-Computersystem 136 über den gesicherten Transportlayer der zweiten Session 202 aufgebaut. Beispielsweise handelt es sich bei dem Programm 113 um ein Browser-Plug-in des Internet-Browsers 112. Alternativ kann es sich bei dem Programm 113 auch um ein weiteres Anwendungsprogramm handeln. Es ist dabei auch möglich, die Funktionalitäten des Internet-Browsers 112 und die des Programms 113 in einem Programm zu implementieren.
- Über die dritte Session 203 wird dann zumindest das Zertifikat 144 an das Programm 113 übertragen.
- Durch das Programm 113 wird dann geprüft, ob die in dem Zertifikat 144 angegebenen Leserechte ausreichend sind, um einen Lesezugriff des ID-Provider-Computersystems 136 auf das oder die gemäß der Attributspezifikation, die in dem Request 166 beinhaltet ist, zu lesenden Attribute zuzulassen.

Nur dann, wenn diese Leserechte ausreichend sind, werden die folgenden Schritte durchgeführt:
a) Es wird eine lokale Verbindung 176 zwischen den Schnittstellen 104 und 108 aufgebaut. Beispielsweise erscheint auf dem Bildschirm des Nutzer-Computersystems 100 eine Aufforderung für den Nutzer 102 zum Einführen des ID-Tokens 106 in ein Lesegerät des Nutzer-Computersystems 100, welches die Schnittstelle 104 aufweist oder zum Auflegen des ID-Tokens 106 auf eine kontaktlos ausgebildete Schnittstelle 104.
b) Der Nutzer 102 authentifiziert sich dann gegenüber dem ID-Token beispielsweise durch Eingabe seiner PIN in das Nutzer-Computersystem 100 bzw. dessen Lesegerät. Die Authentifizierung des Nutzers kann mit Hilfe eines kryptographischen Protokolls erfolgen, beispielsweise mittels eines Challenge-Response-Protokolls oder basierend auf einem Diffie-Helman-Schlüsselaustausch, wobei im Rahmen der Authentifizierung des Nutzers ein ephemeraler öffentlicher Schlüssel vereinbart werden kann.
c) Unter der Voraussetzung der erfolgreichen Authentifizierung des Nutzers wird eine vierte Session 204 zwischen dem ID-Token 106 und dem ID-Provider-Computersystem 136 aufgebaut, und zwar über die lokale Verbindung 176 und die dritte Session 203. Die vierte Session 204 wird mit einer Ende-zu-Ende-Verschlüsselung mit Hilfe des Session-Keys geschützt.
d) Über die vierte Session erfolgt dann eine gegenseitige Authentifizierung des ID-Tokens 106 und des ID-Provider-Computersystems 136 mit Hilfe der jeweiligen privaten Schlüssel, das heißt den in dem geschützten Speicherbereich 122 gespeicherten privaten Schlüssels des ID-Tokens 106 und dem privaten Schlüssels 142 des ID-Provider-Computersystems 136. Für diese gegenseitige Authentifizierung können die Zertifikate des ID-Tokens 106 aus dem Speicherbereich 126 (vergleiche Figur 1) sowie das Zertifikat 144 des ID-Provider-Computersystems 136 über die vierte Session ausgetauscht werden.
e) Unter der Voraussetzung der erfolgreichen Authentifizierung des Nutzers gegenüber dem ID-Token und der erfolgreichen gegenseitigen Authentifizierung des ID-Tokens 106 und des ID-Provider-Computersystems 136 sowie der weiteren Voraussetzung der Übereinstimmung des Chiffrats der Transaktionsdaten mit den Transaktionsdaten, liest dann das ID-Provider-Computersystem 136 das oder die Attribute gemäß der Attributspezifikation aus dem ID-Token 106 aus, wobei die Attribute durch die Ende-zu-Ende-Verschlüsselung bei der Übertragung von dem ID-Token 106 zu dem ID-Provider-Computersystem 136 geschützt werden. Hierzu sendet das ID-Provider-Computersystem über die vierte Session 204 ein Lesekommando über die vierte Session an den ID-Token 106. Das Lesekommando 182 beinhaltet die Attributspezifikation, das heißt die Auswahl derjenigen Attribute, die aus dem geschützten Speicherbereich 124 des ID-Tokens 106 ausgelesen werden sollen.
   Der Prozessor 145 dient ferner zur Ausführung von Programminstruktionen 143, die einen kryptografisches Verfahren zur Erzeugung einer ersten Transaktionsnummer implementieren. Beispielsweise wird zur Erzeugung der ersten Transaktionsnummer der Session Key verwendet, mit dem die Ende-zu-Ende-Verschlüsselung in dem oben genannten Schritt e) erfolgt. Beispielsweise wird durch Ausführung der Programminstruktionen 143 ein HASH-Wert gebildet, in den der Session Key und weitere Daten, wie zum Beispiel weitere kryptografische Schlüssel, das oder die ausgelesenen Attribute oder der ephemerale öffentliche Schlüssel miteingehen können. Im letztgenannten Fall wird der ephemerale öffentliche Schlüssel in dem Schritt e) von dem ID-Provider-Computersystem ebenfalls über die vierte Session 204 mit Ende-zu-Ende-Verschlüsselung aus dem ID-Token 106 ausgelesen.
   Durch Ausführung der Programminstruktionen 178 wird dann von dem ID-Provider-Computersystem 136 die Response 174, beispielsweise ein SAML-Response, auf den Request 166 erzeugt. Die Response 178 beinhaltet die zuvor über die vierte Session 240 aus dem ID-Token 106 ausgelesenen Attribute, die erste Transaktionsnummer sowie beispielsweise die Kennung 180, die das Dienst-Computersystem 150 initial für den Request 166 vergeben hat. Die Response 174 wird von dem ID-Provider-Computersystem 136 mit Hilfe des privaten Schlüssels 142 signiert und dann in dem Speicher 140 gespeichert, so dass der Request 166 von der logischen Adresse abrufbar ist.
   - Das Nutzer-Computersystem 100, wie zum Beispiel dessen Internet-Browser 112, liest dann mit Hilfe der logischen Adresse die Response 174 beispielsweise über die zweite Session 202 aus dem Speicher 140.
   - Die Response 174 wird dann von dem Nutzer-Computersystem 100, beispielsweise von dem Internet-Browser 112, über die erste Session 201 an das Dienst-Computersystem 150 weitergeleitet. Hierbei kann vorgesehen sein, dass der Nutzer 102 von dem Internet-Browser 112 zur Eingabe einer Bestätigung aufgefordert wird, bevor die Response 174 an das Dienst-Computersystem weitergeleitet wird. Dabei kann ferner vorgesehen sein, dass von dem Internet-Browser der Inhalt der Response 174 ganz oder teilweise angezeigt wird, insbesondere die aus dem ID-Token ausgelesenen Attribute, damit sich der Nutzer 102 von der Richtigkeit dieser Daten überzeugen kann, bevor sie an das Dienst-Computersystem 150 zur Durchführung der Transaktion weitergeleitet werden.
   - Das Dienst-Computersystem 150 ordnet die empfangene Response 174 dem Request 166 anhand der übereinstimmenden Kennungen 180 des Requests 166 und der Response 174 zu. Alternativ erfolgt die Zuordnung über die ausgelesenen Attribute, insbesondere über den rID.

   - Das Dienst-Computersystem 150 prüft dann die Signatur der Response 174 und speichert die Response 174.
      - Nutzerseitig wird eine zweite Transaktionsnummer mit demselben kryptografischen Verfahren erzeugt, welches auch durch die Programminstruktionen 143 implementiert wird. Dies kann durch das Nutzer-Computersystem 100, dessen Lesegerät oder durch den ID-Token 106 erfolgen. Beispielsweise dient der Prozessor 128 des ID-Tokens 106 zur Ausführung von Programminstruktionen 133 zur Erzeugung der zweiten Transaktionsnummer (vergleiche Figur 1). Diese zweite Transaktionsnummer wird durch den ID-Token 106 in der gleichen Art und Weise, das heißt basierend auf den gleichen Daten und mithilfe desselben kryptografischen Verfahrens, abgeleitet, wie dies durch die Programminstruktionen 143 seitens des ID-Provider-Computersystems 136 erfolgt. Beispielsweise wird also der Session Key für die Ende-zu-Ende-Verschlüsselung und/oder der ephemeralen öffentlichen Schlüssel, der bei der Authentifizierung des Nutzers gegenüber dem ID-Token erzeugt worden ist, für die Erzeugung der zweiten Transaktionsnummer verwendet.

Der ID-Token 106 kann ein Display 147 aufweisen, auf dem die zweite Transaktionsnummer angezeigt wird, sodass der Nutzer 102 die zweite Transaktionsnummer ablesen kann (vergleiche Figur 1). Der Nutzer 102 gibt dann die zweite Transaktionsnummer in die Webseite 160 ein, sodass die zweite Transaktionsnummer über die erste Session 201 an das Dienst-Computersystem 150 übertragen wird. Das Dienst-Computersystem 150 greift dann auf die in dem Speicher 191 gespeicherte Response 174 zu, um die erste Transaktionsnummer zu lesen. Stimmen die ersten und zweiten Transaktionsnummern miteinander überein, das heißt sind diese identisch, so wird anschließend die angeforderte Transaktion von dem Dienst-Computersystem durchgeführt. Hierzu kann erforderlich sein, dass weitere Prüfungen anhand des oder der Attribute durch das Dienst-Computersystem 150 durchgeführt werden,, indem das oder die Attribute mit einem oder mehreren vorgegebenen Kriterien verglichen wird. Bei diesen Kriterien kann es sich zum Beispiel um das Alter oder die Kreditwürdigkeit des Nutzers 102 handeln. Bei dem Attribut kann es sich auch um ein Pseudonym des Nutzers 102 handeln, mit Hilfe dessen das Dienst-Computersystem 150 dann ein in einer Datenbank des Dienst-Computersystems 150 gespeichertes Attribut des Nutzers 102 ausliest. Das Prüfkriterium ist hierbei, ob ein Nutzer mit dem in der Response 174 beinhalteten Pseudonym seitens des Dienst-Computersystems 150 registriert ist.

Alternativ erfolgt die Übertragung der zweiten Transaktionsnummer von dem ID-Token 106, ohne dass der Nutzer 102 die zweite Transaktionsnummer ablesen und manuell wieder eingeben muss. Beispielsweise wird die zweite Transaktionsnummer von dem Programm 113 aus dem ID-Token 106 ausgelesen und über die erste Session an das Dienst-Computersystem übertragen. Hierfür kann es erforderlich sein, dass der Nutzer 102 eine Bestätigung in das Nutzer-Computersystem 100, das Lesegerät oder den ID-Token 106 eingibt.

Das ID-Provider-Computersystem 136 empfängt also das Chiffrat der Transaktionsdaten als Teil des Request 166. Dieses Chiffrat der Transaktionsdaten sendet das ID-Provider-Computersystem 136 beispielsweise über die dritte Session 203 zusammen mit dem Zertifikat 144. Das Programm 113 berechnet dann aus den Transaktionsdaten, die es zum Beispiel über die erste Session von dem Dienst-Computersystem 150 oder durch Eingabe des Nutzers 102 in das Nutzer-Computersystem 100 empfangen hat, das Chiffrat mithilfe der vorgegebenen Einwegfunktion und überprüft ob das so berechnete Chiffrat mit dem von dem ID-Provider-Computersystem 136 empfangenen Chiffrat übereinstimmt. Wenn dies nicht der Fall ist, wird der Ablauf an dieser Stelle abgebrochen.

Alternativ erfolgt diese Prüfung nicht durch das Programm 113, sondern durch das Lesegerät des Nutzer-Computersystems 100 oder durch den ID-Token 106 selbst. Hierzu kann das Chiffrat der Transaktionsdaten, welches das Nutzer-Computersystem von dem ID-Provider-Computersystem 136 empfangen hat sowie auch die Transaktionsdaten an das Lesegerät oder über die Schnittstelle 104 an den ID-Token 106 weitergeleitet werden. Dort erfolgt dann jeweils die Erzeugung des Chiffrats und die Überprüfung auf Übereinstimmung des berechneten Chiffrats zu dem von dem ID-Provider-Computersystem 136 über das Nutzer-Computersystem 100 empfangenen Chiffrats.

Alternativ kann das ID-Provider-Computersystem 136 das Chiffrat der Transaktionsdaten über die vierte Session 204 unmittelbar an den ID-Token 106 übertragen. Ferner empfängt der ID-Token 106 die Transaktionsdaten über die Schnittstelle 104 von dem Nutzer-Computersystem 100. Der ID-Token 106 berechnet aus den Transaktionsdaten das Chiffrat mithilfe der vorgegebenen Einwegfunktion und prüft das so berechnete Chiffrat mit dem über die vierte Session empfangenen Chiffrat auf Übereinstimmung. Wenn keine Übereinstimmung vorliegt, wird der Ablauf an dieser Stelle abgebrochen. Diese Ausführungsform ist besonders vorteilhaft, da selbst dann, wenn auf dem Nutzer-Computersystem eine Schad-Software, wie zum Beispiel ein Trojaner, vorhanden sein sollte, keine Angriffsmöglichkeit gegeben ist.

Nach einer Ausführungsform der Erfindung handelt es sich bei dem Programm 113 um einen Browser-Plug-in, das in einer Registry eines Betriebssystems des Nutzer-Computersystems mit einer Plug-in-Kennung registriert ist, wobei es sich bei dem Betriebssystem zum Beispiel um ein Windows-Betriebssystem, Android oder iOS handeln kann. In diesem Fall beinhaltet die Nachricht 172 von dem ID-Provider-Computersystem an den Internet-Browser 112 diese Plug-in-Kennung 184, so dass das Plug-in 113 aufgrund des Empfangs der Nachricht gestartet wird.

Nach einer weiteren Ausführungsform der Erfindung handelt es sich bei dem Programm 113 ein von dem Internet-Browser 112 separates Anwendungsprogramm, wie zum Beispiel eine sogenannte Bürger-App oder Ausweis-App. Dieses Anwendungsprogramm 113 wird von dem Internet-Browser 112 durch Aufruf einer lokalen URL gestartet, wobei die lokale URL eine fest vorgegebener Portnummer gemäß dem TCP-Protokoll beinhaltet. Diese lokale URL wird zusammen mit der Webseite 160 von dem Dienst-Computersystem 150 an das Nutzer-Computersystem 100 übertragen und zwar über die erste Session 201, um das Starten des Anwendungsprogramms 113 mit Hilfe der lokalen URL durch den Internet-Browser 112 zu bewirken.

Die Response 174 beinhaltet das Chiffrat der Zusatzinformation 168. Das Dienst-Computersystem 150 entschlüsselt das Chiffrat der Zusatzinformation 168 mit Hilfe des privaten Schlüssels des Dienst-Computersystems 150, um dann mit Hilfe der Zusatzinformation 168 die angeforderte Transaktion durchzuführen. Hierbei kann es sich zum Beispiel um die Durchführung einer finanziellen Transaktion, wie zum Beispiel die Durchführung einer Überweisung in der Höhe des Bezahlbetrags handeln, der in der Zusatzinformation 168 angegeben ist.

Nach einer Ausführungsform der Erfindung beinhaltet die Zusatzinformation 168 ein OTP. Das Dienst-Computersystem 150 prüft dann als zusätzliche Voraussetzung für die Durchführung der Transaktion, ob das OTP gültig ist. Vorzugsweise wird das OTP durch das Nutzer-Computersystem 100 mit dem öffentlichen Schlüssel des Dienst-Computersystems 150 verschlüsselt und dann von dem Dienst-Computersystems 150 nach dem Empfang der Zusatzinformation mit dem verschlüsselten OTP entschlüsselt, um dann dessen Validität zu prüfen.

Nach einer Ausführungsform der Erfindung gehört zu dem erfindungsgemäßen Computersystem ein Terminal 186, bei dem es sich zum Beispiel um einen Automat, insbesondere einen Bankautomat oder Verkaufsautomat, handeln kann. Beispielsweise kann der Nutzer 102 in das Terminal 186 einen Geldbetrag eingeben, um Bargeld von seinem Konto abzuheben. Auf einem Display 188 des Automat wird dann ein optisch erfassbares Muster angezeigt, wie zum Beispiel ein QR-Code, der ein URL des Dienst-Computersystems 150 sowie den von dem Nutzer 102 gewünschten Geldbetrag beinhaltet.

Dieses optische Muster wird von dem Display 188 mit Hilfe einer Kamera 190 des Nutzer-Computersystems 100 erfasst. Das Nutzer-Computersystem 100 erzeugt dann die Transaktionsanforderung 158, die diesen Geldbetrag angibt. Die erste Session 201 wird hier mit Hilfe der aus dem optischen Muster erfassten URL des Dienst-Computersystems 150 aufgebaut und die Transaktionsanforderung 158 mit dem gewünschten Geldbetrag wird über diese erste Session 201 an das Dienst-Computersystem 150 übermittelt. Das Dienst-Computersystem 150 erzeugt dann einen entsprechenden Request 166, um die für die Auszahlung des gewünschten Geldbetrags erforderlichen Attribute und Zusatzinformationen 168 abzufragen.

Je nach Ausführungsform wird dann durch die ID-Provider-Computersystem 136 oder durch das Dienst-Computersystem 150 die Belastung eines Kontos des Nutzers 102, welches dieser zum Beispiel in der Zusatzinformation 168 angegeben hat, veranlasst. Aufgrund des Empfangs der Response 174 und der Veranlassung der Zahlung empfängt dann das Terminal 186 ein Signal zur Ausgabe des gewünschten Geldbetrags zum Beispiel in Form von Bargeld oder zur Aufladung einer Cash-Card des Nutzers 102. Dies kann so erfolgen, dass das Terminal 186 unmittelbar mit dem Dienst-Computersystem 150 verbunden ist oder über das Netzwerk 116.

Alternativ kann es sich bei dem Terminal 186 auch um einen Verkaufsautomat handeln, wobei dann kein Bargeld, sondern ein gewünschtes Produkt, wie zum Beispiel eine Getränkedose oder eine Zigarettenschachtel von dem Verkaufsautomaten abgegeben wird, nachdem die Durchführung der Zahlung von dem Dienst-Computersystem 150 signalisiert worden ist.

In einer weiteren Anwendung kann es sich bei dem Terminal 186 um ein mobiles Telekommunikationsgerät, insbesondere ein Smartphone handeln. Wenn der Nutzer 102 von dem Inhaber des Terminals 186 etwas kaufen möchte, so gibt der Inhaber des Terminals 186 den entsprechenden Kaufpreis in das Terminal 186 ein, so dass dann auf dem Display 188 in Form des optisch erfassbaren Musters wiederum dieser Kaufpreis als Bezahlbetrag sowie die URL des Dienst-Computersystems 150 ausgegeben wird. Nach Beendigung der Transaktion empfängt das Terminal 186 von dem Dienst-Computersystem 150 ein Signal, welches anzeigt, dass der Bezahlvorgang erfolgt ist und der Inhaber des Terminals 186 gibt dann die Ware an den Nutzer 102 ab. Dies kann auch in dem Kassensystem zum Beispiel eines Supermarkts implementiert sein. Eine weitere Anwendung ist ein Taxameter, welches Taxigebühren erfasst oder ein anderer Verbrauchszähler, wie zum Beispiel ein Verbrauchszähler für den Strom- oder Gasverbrauch eines Haushalts, insbesondere ein sog. Smartmeter.

### Bezugszeichenliste

- 100: Nutzer-Computersystem
- 102: Nutzer
- 104: Schnittstelle
- 106: ID-Token
- 108: Schnittstelle
- 110: Prozessor
- 112: Anwendungsprogramm/Internet-Browser
- 113: Programm/Anwendungsprogramm
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 133: Programminstruktionen
- 134: Programminstruktionen
- 136: ID-Provider-Computersystem
- 138: Netzwerk-Schnittstelle
- 140: Speicher
- 141: geschützter Speicherbereich
- 142: privater Schlüssel
- 143: Programminstruktionen
- 144: Zertifikat
- 145: Prozessor
- 146: Programminstruktionen
- 147: Display
- 148: Programminstruktionen
- 150: Dienst-Computersystem
- 152: Netzwerk-Schnittstelle
- 154: Prozessor
- 156: Programminstruktionen
- 158: Transaktionsanforderung
- 160: Webseite
- 162: Eingabefeld
- 164: Eingabeelement
- 166: Request
- 168: Zusatzinformation
- 170: Programminstruktionen
- 172: Nachricht
- 174: Response
- 176: lokale Verbindung
- 178: Programminstruktionen
- 180: Kennung
- 182: Lesekommando
- 184: Kennung
- 186: Terminal
- 188: Display
- 190: Kamera
- 191: Speicher
- 201: erste Session
- 202: zweite Session
- 203: dritte Session
- 204: vierte Session

## Patentansprüche

1. Elektronisches Transaktionsverfahren unter Verwendung eines ID-Tokens (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät eines Nutzer-Computersystems (100) aufweist, mit folgenden Schritten:
- Übertragung einer Transaktionsanforderung (158) von dem Nutzer-Computersystem an ein Dienst-Computersystem (150) über ein Netzwerk (116),
- Übertragung eines Request (166) von dem Dienst-Computersystem über das Nutzer-Computersystems (100) an ein ID-Provider-Computersystem (136), wobei die Übertragung über das Netzwerk erfolgt, wobei der Request eine Attributspezifikation, des zumindest einen aus dem ID-Token für die Durchführung der Transaktion auszulesenden Attributs beinhaltet,
- Authentifizierung des Nutzers gegenüber dem ID-Token,
- Authentifizierung des ID-Provider-Computersystems gegenüber dem ID-Token über das Netzwerk,
- unter der Voraussetzung der erfolgreichen Authentifizierung des Nutzers und des ID-Provider-Computersystems gegenüber dem ID-Token, Auslesen des oder der Attribute gemäß der Attributspezifikation durch das ID-Provider-Computersystem aus dem ID-Token über das Netzwerk mit Ende-zu-Ende-Verschlüsselung,
- Erzeugung (143) einer ersten Transaktionsnummer für die Transaktion durch das ID-Provider-Computersystem mit Hilfe eines kryptographischen Verfahrens,
- Übertragung einer Response (174) von dem ID-Provider-Computersystem über das Nutzer-Computersystem an das Dienst-Computersystem, wobei die Übertragung der Response über das Netzwerk erfolgt, wobei die Response das oder die ausgelesenen Attribute und die erste Transaktionsnummer beinhaltet, und wobei die Response von dem ID-Provider-Computersystem signiert ist,
- Speicherung der von dem ID-Provider-Computersystem erzeugten ersten Transaktionsnummer in einem Speicher (191) durch das Dienst-Computersystem,
- Erzeugung (133) einer zweiten Transaktionsnummer für die Transaktion durch das Nutzer-Computersystem, das Lesegerät oder den ID-Token mit Hilfe desselben kryptographischen Verfahrens,
- Übertragung der zweiten Transaktionsnummer von dem Nutzer-Computersystem an das Dienst-Computersystem (150) über das Netzwerk (116),
- Lesen der ersten Transaktionsnummer aus dem Speicher durch das Dienst-Computersystem,
- Prüfung der ersten und der zweiten Transaktionsnummern auf Übereinstimmung durch das Dienst-Computersystem,
- Unter der Vorraussetzung, dass die ersten und der zweiten Transaktionsnummern übereinstimmen, Durchführung der Transaktion mithilfe der Transaktionsdaten und des oder der Attribute durch das Dienst-Computersystem.

2. Verfahren nach Anspruch 1, mit folgenden weiteren Schritten:
- Erzeugung eines Chiffrats der Transaktionsdaten mit Hilfe einer Einwegfunktion durch das Dienst-Computersystem, wobei der Request das Chiffrat beinhaltet,
- Signierung des Chiffrats der Transaktionsdaten von dem ID-Provider-Computersystem nach Empfang des Request,
- Übertragung des signierten Chiffrats der Transaktionsdaten von dem ID-Provider-Computersystem an das Nutzer-Computersystem,
- Prüfung, ob das Chiffrat den Transaktionsdaten entspricht,
wobei das Auslesen des oder der Attribute gemäß der Attributspezifikation durch das ID-Provider-Computersystem aus dem ID-Token über das Netzwerk mit Ende-zu-Ende-Verschlüsselung nur unter der weiteren Voraussetzung der Übereinstimmung des Chiffrats und der Transaktionsdaten erfolgt.

3. Verfahren nach Anspruch 2, wobei die Prüfung, ob das Chiffrat mit den Transaktionsdaten übereinstimmt, durch das Nutzer-Computersystem durchgeführt wird.

4. Verfahren nach Anspruch 2, wobei das Nutzer-Computersystem die Transaktionsdaten an das Lesegerät überträgt, und die Prüfung, ob das Chiffrat mit den Transaktionsdaten übereinstimmt, durch das Lesegerät durchgeführt wird.

5. Verfahren nach Anspruch 2, wobei das Nutzer-Computersystem die Transaktionsdaten über das Lesegerät an den ID-Token überträgt, und der ID-Token die Prüfung, ob das Chiffrat mit den Transaktionsdaten übereinstimmt, vornimmt.

6. Verfahren nach Anspruch 1, wobei die Transaktionsdaten im Klartext von dem Dienst-Computersystem signiert werden und die signierten Transaktionsdaten im Klartext von dem Dienst-Computersystem über das Nutzer-Computersystems (100) an das ID-Provider-Computersystem (136) über das Netzwerk übertragen werden, wobei die Transaktionsdaten durch das ID-Provider-Computersystem signiert werden und von dem ID-Provider-Computersystem die signierten Tansaktiondaten an das Nutzer-Computersystem übertragen werden, wobei die Erzeugung der zweiten Transaktionsnummer nur erfolgt, wenn die von dem ID-Provider-Computersystem empfangenen Transaktionsdaten mit den von dem Dienst-Computersystem empfangenen Transaktionsdaten übereinstimmen.

7. Verfahren nach einem der vorhergehenden Ansprüche, wobei die Authentifizierung des Nutzers gegenüber dem ID-Token aufgrund der Durchführung eines Diffie-Hellman Schlüsselaustauschs erfolgt, wobei ein ephemeraler öffentlicher Schlüssel abgeleitet wird, wobei die Erzeugung der zweiten Transaktionsnummer durch das Lesegerät erfolgt, indem der ephemerale öffentliche Schlüssel für die Durchführung des kryptografischen Verfahrens verwendet wird, und wobei der ephemerale öffentliche Schlüssel von dem ID-Provider-Computersystem aus dem ID-Token über das Netzwerk mit der Ende-zu-Ende-Verschlüsselung ausgelesen wird, um mithilfe des ephemeralen öffentlichen Schlüssels die erste Transaktionsnummer zu erzeugen.

8. Verfahren nach Anspruch 7, wobei der Diffie-Hellman Schlüsselaustausch im Rahmen des PACE-Protokolls erfolgt.

9. Verfahren nach einem der vorhergehenden Ansprüche 1 bis 8, wobei das ID-Provider-Computersystem für das Auslesen des oder der Attribute eine Kommando-APDU über das Nutzer-Computersystem und das Lesegerät an den ID-Token sendet und das Lesegerät den verschlüsselten Inhalt der daraufhin von dem ID-Token abgegebenen Antwort APDU für die Erzeugung der zweiten Transaktionsnummer verwendet.

10. Verfahren nach Anspruch 7, 8 oder 9, wobei das Lesegerät ein Display hat, über das die zweite Transaktionsnummer ausgegeben wird.

11. Verfahren nach einem der Ansprüche 1 bis 6, wobei die Erzeugung der zweiten Transaktionsnummer durch den ID-Token erfolgt und der ID-Token ein Display zur Ausgabe der zweiten Transaktionsnummer hat.

12. Verfahren nach Anspruch 11, wobei ein Schlüssel der Ende-zu-Ende-Verschlüsselung und/oder ein von dem ID-Token erzeugter Restricted Identifier und/oder zumindest ein Teil der Transaktionsdaten im Klartext und/oder ein Chiffrat der Transaktionsdaten in das kryptografische Verfahren eingeht, um die zweite Transaktionsnummer zu erzeugen.

13. Verfahren nach einem der vorhergehenden Ansprüche, mit folgenden Schritten
- Aufbau einer ersten Session (201) zwischen einem Anwendungsprogramm (112), insbesondere einem Internetbrowser des Nutzer-Computersystems und einem Dienst-Computersystem (150) über ein Netzwerk (116),
- Empfang der Transaktionsanforderung (158) über die erste Session durch das Dienst-Computersystem von dem Anwendungsprogramm (112),
- Erzeugung des Request (166) durch das Dienst-Computersystem aufgrund des Empfangs der Transaktionsanforderung, wobei der Request von dem Dienst-Computersystem signiert wird und der Request eine Attributspezifikation, des zumindest einem aus dem ID-Token für die Durchführung der Transaktion auszulesenden Attributs, Transaktionsdaten zur Spezifizierung der Transaktion, eine Kennung (180) des Request, eine URL eines ID-Provider-Computersystems und eine URL des Dienst-Computersystems beinhaltet,
- Aufbau einer zweiten Session zwischen dem Internetbrowser und dem ID-Provider-Computersystem über das Netzwerk mithilfe der URL des ID-Provider-Computersystems, wobei die zweite Session mit einem gesicherten Transportlayer aufgebaut wird,
- Weiterleitung des Request und eines Chiffrats der Transaktionsdaten von dem Internetbrowser an das ID-Provider-Computersystem über die zweite Session, wobei das Chiffrat durch eine Einwegfunktion aus den Transaktionsdaten abgeleitet wird,
- Aufbau der dritten Session zwischen einem Programm des Nutzer-Computersystems und dem ID-Provider-Computersystem über den gesicherten Transportlayer der zweiten Session, wobei das Programm von dem Internetbrowser verschieden ist,
- Übertragung zumindest eines Zertifikats des ID-Provider-Computersystems an das Programm, wobei das Zertifikat eine Angabe von Leserechten des ID-Provider-Computersystems zum Lesen von einem oder mehreren der in dem ID-Token gespeicherten Attribute beinhaltet, wobei die Übertragung des Zertifikats über die dritte Session erfolgt,
- Prüfung durch das Programm, ob die in dem Zertifikat angegebenen Leserechte ausreichend sind, um einen Lesezugriff des ID-Provider-Computersystems auf das oder die gemäß der Attributspezifikation zu lesenden Attribute zu zulassen, und nur wenn die Leserechte ausreichend sind:
a) Aufbau einer lokalen Verbindung (176) zwischen dem Lesegerät des Nutzer-Computersystems und dem ID-Token,
b) Authentifizierung des Nutzers gegenüber dem ID-Token, wobei ein Session-Key vereinbart wird,
c) Aufbau einer vierten Session (204) zwischen dem ID-Token und dem ID-Provider-Computersystem über die lokale Verbindung und die dritte Session mit der Ende-zu-Ende Verschlüsselung mithilfe des Session-Key,
d) Gegenseitige Authentifizierung des ID-Tokens und des ID-Provider-Computersystems über die vierte Session,
e) Auslesen des oder der Attribute gemäß der Attributspezifikation durch das ID-Provider-Computersystem über die vierte Session aus dem ID-Token.
- Erzeugung der Response (174), die das oder die ausgelesenen Attribute, die erste Transaktionsnummer und zumindest die Kennung (180) des Request beinhaltet, und die von dem ID-Provider-Computersystem signiert wird,
- Speicherung der Response zum Abrufen mit Hilfe der logischen Adresse,
- Lesen der Response von dem ID-Provider-Computersystem durch das Nutzer-Computersystem durch Abruf der Response mittels eines Lesekommandos von der logischen Adresse über das Netzwerk,
- Weiterleitung der Response durch das Nutzer-Computersystem über die erste Session an das Dienst-Computersystem,
- Zuordnung der Response zu dem Request mit Hilfe der Kennung, die in der Response beinhaltet ist, durch das Dienst-Computersystem,
- Durchführung der Transaktion mithilfe der Response durch das ID-Provider-Computersystem.

14. Verfahren nach Anspruch 13, wobei es sich bei dem Schlüssel der Ende-zu-Ende Verschlüsselung um den Session-Key handelt, wobei der Session-key zur Erzeugung der ersten und zweiten Transaktionsnummern mit Hilfe des kryptographischen Verfahrens verwendet wird.

15. Verfahren nach Anspruch 13 oder 14, wobei es sich bei dem Anwendungsprogramm um einen Internetbrowser handelt, und das weitere Programm ein Plug-in des Internetbrowsers ist, wobei das Plug-in in einer Registry eines Betriebssystems des Nutzer-Computersystems mit einer Plug-in-Kennung (184) registriert ist, wobei die Nachricht von dem ID-Provider-Computersystem an den Internetbrowser die Plug-in-Kennung beinhaltet, sodass das Plug-in aufgrund des Empfangs der Nachricht gestartet wird.

16. Verfahren nach Anspruch 13 oder 14, wobei es sich bei dem Programm um ein weiteres Anwendungsprogramm handelt, welches von dem Internetbrowser durch einen Aufruf einer lokalen URL gestartet werden kann, wobei die lokale URL eine fest vorgegebene Portnummer gemäß dem TCP-Protokoll beinhaltet, wobei die lokale URL zusammen mit der Webseite von dem Dienst-Computersystem an das Nutzer-Computersystem übertragen wird, um das Starten des weiteren Anwendungsprogramms mithilfe der lokalen URL durch den Internetbrowser zu bewirken.

17. Verfahren nach einem der vorhergehenden Ansprüche, wobei es sich bei dem ID-Token um ein Wert- oder Sicherheitsdokument handelt, das heißt insbesondere ein Ausweisdokument, das heißt ein ID-Dokument, insbesondere einen elektronischen Personalausweis, Reisepass, Führerschein, Firmenausweis oder ein Zahlungsmittel, wie zum Beispiel eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

18. Computersystem mit einem Dienst-Computersystem (150), einem Nutzer-Computersystem (100) einem ID-Provider-Computersystem (136) und einem ID-Token (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät eines Nutzer-Computersystems (100) aufweist,
wobei das Dienst-Computersystem, das Nutzer-Computersystem, das ID-Provider-Computersystem und der ID-Token zur Durchführung der folgenden Schritte ausgebildet sind:
- Übertragung einer Transaktionsanforderung (158) von dem Nutzer-Computersystem an ein Dienst-Computersystem (150) über ein Netzwerk (116),
- Übertragung eines Request (166) von dem Dienst-Computersystem über das Nutzer-Computersystems (100) an ein ID-Provider-Computersystem (136), wobei die Übertragung über das Netzwerk erfolgt, wobei der Request eine Attributspezifikation, der aus dem ID-Token für die Durchführung der Transaktion auszulesenden Attribute beinhaltet, ,
- Authentifizierung des Nutzers gegenüber dem ID-Token,
- Authentifizierung des ID-Provider-Computersystems gegenüber dem ID-Token über das Netzwerk,
- unter der Voraussetzung der erfolgreichen Authentifizierung des Nutzers und des ID-Provider-Computersystems gegenüber dem ID-Token, Auslesen des oder der Attribute gemäß der Attributspezifikation durch das ID-Provider-Computersystem aus dem ID-Token über das Netzwerk mit Ende-zu-Ende-Verschlüsselung,
- Erzeugung einer ersten Transaktionsnummer für die Transaktion durch das ID-Provider-Computersystem mit Hilfe eines kryptographischen Verfahrens,
- Übertragung einer Response (174) von dem ID-Provider-Computersystem über das Nutzer-Computersystem an das Dienst-Computersystem, wobei die Übertragung der Response über das Netzwerk erfolgt, wobei die Response das oder die ausgelesenen Attribute und die erste Transaktionsnummer beinhaltet, und wobei die Response von dem ID-Provider-Computersystem signiert ist,
- Speicherung der von dem ID-Provider-Computersystem erzeugten ersten Transaktionsnummer in einem Speicher durch das Dienst-Computersystem,
- Erzeugung einer zweiten Transaktionsnummer für die Transaktion durch das Nutzer-Computersystem, das Lesegerät oder den ID-Token mit Hilfe desselben kryptographischen Verfahrens,
- Übertragung der zweiten Transaktionsnummer von dem Nutzer-Computersystem an das Dienst-Computersystem (150) über das Netzwerk (116),
- Lesen der ersten Transaktionsnummer aus dem Speicher durch das Dienst-Computersystem,
- Prüfung der ersten und der zweiten Transaktionsnummern auf Übereinstimmung durch das Dienst-Computersystem,
- Unter der Vorraussetzung, dass die ersten und der zweiten Transaktionsnummern übereinstimmen, Durchführung der Transaktion mithilfe der Transaktionsdaten und des oder der Attribute durch das Dienst-Computersystem.

## Claims

1. An electronic transaction method using an ID token (106) assigned to a user (102), wherein the ID token has an electronic memory (118) with a protected memory area (124), in which one or more attributes are stored, wherein the protected memory area can be accessed only via a processor (128) of the ID token, and wherein the ID token has a communication interface (108) for communication with a reader of a user computer system (100), said method comprising the following steps:
- transmitting a transaction requirement (158) from the user computer system to a service computer system (150) via a network (116);
- transmitting a request (166) from the service computer system via the user computer system (100) to an ID provider computer system (136), wherein the transmission is performed via the network, wherein the request includes an attribute specification of the at least one attribute to be read from the ID token for the execution of the transaction;
- authenticating the user to the ID token;
- authenticating the ID provider computer system to the ID token via the network;
- on the precondition of successful authentication of the user and the ID provider computer system to the ID token, reading the one or more attributes in accordance with the attribute specification by the ID provider computer system from the ID token via the network with end-to-end encryption;
- generating (143) a first transaction number for the transaction by the ID provider computer system with the aid of a cryptographic method;
- transmitting a response (174) from the ID provider computer system via the user computer system to the service computer system, wherein the response is transmitted via the network, wherein the response includes the read attribute or attributes and the first transaction number, and wherein the response is signed by the ID provider computer system;
- storing the first transaction number generated by the ID provider computer system in a memory (191) by the service computer system;
- generating (133) a second transaction number for the transaction by the user computer system, the reader, or the ID token with the aid of the same cryptographic method;
- transmitting the second transaction number from the user computer system to the service computer system (150) via the network (116);
- reading the first transaction number from the memory by the service computer system;
- checking for a match between the first and second transaction numbers by the service computer system;
- on the precondition that the first and second transaction numbers match, executing the transaction with the aid of the transaction data and the one or more attributes by the service computer system.

2. The method according to claim 1, comprising the following further steps:
- generating a cipher of the transaction data with the aid of a one-way function by the service computer system, wherein the request includes the cipher;
- signing the cipher of the transaction data by the ID provider computer system following receipt of the request;
- transmitting the signed cipher of the transaction data from the ID provider computer system to the user computer system;
- checking whether the cipher corresponds to the transaction data, wherein the one or more attributes are read from the ID token by the ID provider computer system in accordance with the attribute specification via the network with end-to-end encryption only on the further precondition that the cipher and the transaction data match.

3. The method according to claim 2, wherein the checking for a match between the cipher and the transaction data is performed by the user computer system.

4. The method according to claim 2, wherein the user computer system transmits the transaction data to the reader, and the checking as to whether the cipher matches the transaction data is performed by the reader.

5. The method according to claim 2, wherein the user computer system transmits the transaction data via the reader to the ID token, and the ID token checks whether the cipher matches the transaction data.

6. The method according to claim 1, wherein the transaction data are signed in plain text by the service computer system, and the signed transaction data in plain text are transmitted from the service computer system via the user computer system (100) to the ID provider computer system (136) via the network, wherein the transaction data are signed by the ID provider computer system and the signed transaction data are transmitted from the ID provider computer system to the user computer system, wherein the second transaction number is generated only if the transaction data received by the ID provider computer system match the transaction data received by the service computer system.

7. The method according to any one of the preceding claims, wherein the user is authenticated to the ID token on the basis of the execution of a Diffie Hellman key exchange, wherein an ephemeral public key is derived, wherein the second transaction number is generated by the reader by using the ephemeral public key for the execution of the cryptographic method, and wherein the ephemeral public key is read by the ID provider computer system from the ID token via the network with the end-to-end encryption in order to generate the first transaction number with the aid of the ephemeral public key.

8. The method according to claim 7, wherein the Diffie Hellman key exchange is performed within the scope of the PACE protocol.

9. The method according to any one of preceding claims 1 to 8, wherein the ID provider computer system, for the reading of the one or more attributes, sends a command APDU via the user computer system and the reader to the ID token, and the reader uses the encrypted content of the response APDU delivered thereupon by the ID token for the generation of the second transaction number.

10. The method according to claim 7, 8 or 9, wherein the reader has a display, via which the second transaction number is output.

11. The method according to any one of claims 1 to 6, wherein the second transaction number is generated by the ID token, and the ID token has a display for outputting the second transaction number.

12. The method according to claim 11, wherein a key of the end-to-end encryption and/or a restricted identifier generated by the ID token and/or at least part of the transaction data in plain text and/or a cipher of the transaction data are/is incorporated in the cryptographic method in order to generate the second transaction number.

13. The method according to any one of the preceding claims, comprising the following steps:
- establishing a first session (201) between an application program (112), in particular an Internet browser, of the user computer system and a service computer system (150) via a network (116);
- receiving the transaction requirement (158) via the first session by the service computer system from the application program (112);
- generating the request (166) by the service computer system on account of the receipt of the transaction requirement, wherein the request is signed by the service computer system and the request contains an attribute specification of the at least one attribute to be read from the ID token for the execution of the transaction, transaction data for specifying the transaction, an identifier (180) of the request, a URL of an ID provider computer system, and a URL of the service computer system;
- establishing a second session between the Internet browser and the ID provider computer system via the network with the aid of the URL of the ID provider computer system, wherein the second session is established with a secured transport layer;
- forwarding the request and a cipher of the transaction data from the Internet browser to the ID provider computer system via the second session, wherein the cipher is derived from the transaction data by a one-way function;
- establishing the third session between a program of the user computer system and the ID provider computer system via the secured transport layer of the second session, wherein the program is different from the Internet browser;
- transmitting at least one certificate of the ID provider computer system to the program, wherein the certificate contains a specification of read permissions of the ID provider computer system for reading one or more of the attributes stored in the ID token, wherein the certificate is transmitted via the third session;
- checking, by the program, whether the read permissions specified in the certificate are sufficient to grant read access of the ID provider computer system to the one or more attributes to be read in accordance with the attribute specification, and, only if the read permissions are sufficient:
a) establishing a local connection (176) between the reader of the user computer system and the ID token;
b) authenticating the user to the ID token, wherein a session key is agreed;
c) establishing a fourth session (204) between ID token and the ID provider computer system via the local connection and the third session with the end-to-end encryption with the aid of the session key;
d) mutually authenticating the ID token and the ID provider computer system via the fourth session;
e) reading the one or more attributes from the ID token in accordance with the attribute specification by the ID provider computer system via the fourth session;
- generating the response (174), which includes the one or more read attributes, the first transaction number, and at least the identifier (180) of the request, and which is signed by the ID provider computer system;
- storing the response for retrieval with the aid of the logical address;
- reading the response from the ID provider computer system by the user computer system by retrieval of the response by means of a read command from the logical address via the network;
- forwarding the response by the user computer system via the first session to the service computer system;
- assigning the response to the request with the aid of the identifier contained in the response by the service computer system;
- executing the transaction with the aid of the response by the ID provider computer system.

14. The method according to claim 13, wherein the key of the end-to-end encryption is the session key, wherein the session key is used to generate the first and second transaction numbers with the aid of the cryptographic method.

15. The method according to claim 13 or 14, wherein the application program is an Internet browser, and the further program is a plug-in of the Internet browser, wherein the plug-in is registered in a registry of an operating system of the user computer system with a plug-in identifier (184), wherein the message from the ID provider computer system to the Internet browser contains the plug-in identifier, such that the plug-in is started on account of the receipt of the message.

16. The method according to claim 13 or 14, wherein the program is a further application program which can be started from the Internet browser by retrieval of a local URL, wherein the local URL contains a fixedly defined port number in accordance with the TCP protocol, wherein the local URL together with the website is transmitted from the service computer system to the user computer system in order to start the further application program with the aid of the local URL by the Internet browser.

17. The method according to any one of the preceding claims, wherein the ID token is a value or security document, that is to say in particular is an identification document, that is to say an ID document, in particular an electronic personal identity card, passport, driver's licence, company identification document or a payment means, for example a credit card or another proof of authority, for example an admission pass, a consignment note or a visa, in particular a chip card, in particular with RFID and/or NFC interface.

18. A computer system comprising a service computer system (150), a user computer system (100), an ID provider computer system (136) and an ID token (106) assigned to a user (102), wherein the ID token has an electronic memory (118) with a protected memory area (124), in which one or more attributes are stored, wherein access to the protected memory area is possible only via a processor (128) of the ID token, and wherein the ID token has a communication interface (188) for communication with a reader of a user computer system (100),
wherein the service computer system, the user computer system, the ID provider computer system and the ID token are designed to carry out the following steps:
- transmitting a transaction requirement (158) from the user computer system to a service computer system (150) via a network (116),
- transmitting a request (166) from the service computer system via the user computer system (100) to an ID provider computer system (136), wherein the transmission is performed via the network, wherein the request includes an attribute specification of the at least one attribute to be read from the ID token for the execution of the transaction;
- authenticating the user to the ID token;
- authenticating the ID provider computer system to the ID token via the network;
- on the precondition of successful authentication of the user and the ID provider computer system to the ID token, reading the one or more attributes in accordance with the attribute specification by the ID provider computer system from the ID token via the network with end-to-end encryption;
- generating a first transaction number for the transaction by the ID provider computer system with the aid of a cryptographic method;
- transmitting a response (174) from the ID provider computer system via the user computer system to the service computer system, wherein the response is transmitted via the network, wherein the response includes the read attribute or attributes and the first transaction number, and wherein the response is signed by the ID provider computer system;
- storing the first transaction number generated by the ID provider computer system in a memory by the service computer system;
- generating a second transaction number for the transaction by the user computer system, the reader, or the ID token with the aid of the same cryptographic method;
- transmitting the second transaction number from the user computer system to the service computer system (150) via the network (116);
- reading the first transaction number from the memory by the service computer system;
- checking for a match between the first and second transaction numbers by the service computer system;
- on the precondition that the first and second transaction numbers match, executing the transaction with the aid of the transaction data and the one or more attributes by the service computer system.

## Revendications

1. Procédé de transaction électronique, moyennant l'utilisation d'un jeton d'identification (106) qui est associé à un utilisateur (102), le jeton d'identification présentant une mémoire électronique (118) avec une zone de mémoire (124) sécurisée dans laquelle sont stockés un ou plusieurs attributs, où un accès à la zone de mémoire sécurisée est possible uniquement par le biais d'un processeur (128) du jeton d'identification et où le jeton d'identification présente une interface de communication (108) pour la communication avec un lecteur d'un système informatique d'utilisateur (100), avec les étapes suivantes :
- la transmission d'une demande de transaction (158) du système informatique d'utilisateur à un système informatique de service (150) par le biais d'un réseau (116),
- la transmission d'une requête (166) du système informatique de service à un système informatique de fournisseur d'identification (136) par le biais du système informatique d'utilisateur (100),
où la transmission a lieu par le biais du réseau, où la requête contient une spécification d'attribut de l'au moins un attribut à lire à partir du jeton d'identification pour l'exécution de la transaction,
- l'authentification de l'utilisateur vis-à-vis du jeton d'identification,
- l'authentification du système informatique de fournisseur d'identification vis-à-vis du jeton d'identification par le biais du réseau,
- à la condition d'une authentification réussie de l'utilisateur et du système informatique de fournisseur d'identification vis-à-vis du jeton d'identification, la lecture de l'attribut ou des attributs selon la spécification d'attributs par le système informatique de fournisseur d'identification à partir du jeton d'identification par le biais du réseau avec un cryptage de bout en bout,
- la génération (143) d'un premier numéro de transaction pour la transaction par le système informatique de fournisseur d'identification à l'aide d'un procédé cryptographique,
- la transmission d'une réponse (174) du système informatique de fournisseur d'identification au système informatique de service par le biais du système informatique d'utilisateur, où la transmission de la réponse a lieu par le biais du réseau, où la réponse contient l'attribut ou les attributs lus et le premier numéro de transaction, et où la réponse est signée par le système informatique de fournisseur d'identification,
- le stockage du premier numéro de transaction généré par le système informatique de fournisseur d'identification dans une mémoire (191) par le système informatique de service,
- la génération (133) d'un deuxième numéro de transaction pour la transaction par le système informatique d'utilisateur, le lecteur ou le jeton d'identification à l'aide du même procédé cryptographique,
- la transmission du deuxième numéro de transaction du système informatique d'utilisateur au système informatique de service (150) par le biais du réseau (116),
- la lecture du premier numéro de transaction à partir de la mémoire par le système informatique de service,
- la vérification de la concordance des premier et deuxième numéros de transaction par le système informatique de service,
- à la condition que les premier et deuxième numéros de transaction correspondent, l'exécution de la transaction à l'aide des données de transaction et de l'attribut ou des attributs par le système informatique de service.

2. Procédé selon la revendication 1, avec les nouvelles étapes suivantes :
- la génération d'un texte chiffré des données de transaction à l'aide d'une fonction unidirectionnelle par le système informatique de service, où la requête contient le texte chiffré,
- la signature du texte chiffré des données de transaction par le système informatique de fournisseur d'identification après la réception de la requête,
- la transmission du texte chiffré signé des données de transaction à partir du système informatique de fournisseur d'identification vers le système informatique d'utilisateur,
- la vérification si le texte chiffré correspond aux données de transaction, où la lecture de l'attribut ou des attributs a lieu selon la spécification d'attributs par le système informatique de fournisseur d'identification à partir du jeton d'identification par le biais du réseau avec un cryptage de bout en bout uniquement à la condition supplémentaire de la concordance du texte chiffré et des données de transaction.

3. Procédé selon la revendication 2, dans lequel la vérification si le texte chiffré correspond avec les données de transaction est effectuée par le système informatique d'utilisateur.

4. Procédé selon la revendication 2, dans lequel le système informatique d'utilisateur transmet les données de transaction au lecteur et la vérification si le texte chiffré correspond avec les données de transaction est effectuée par le lecteur.

5. Procédé selon la revendication 2, dans lequel le système informatique d'utilisateur transmet les données de transaction au jeton d'identification par le biais du lecteur et le jeton d'identification prend en charge la vérification si le texte chiffré correspond avec les données de transaction.

6. Procédé selon la revendication 1, dans lequel les données de transaction sont signées sous le format de texte par le système informatique de service et les données de transaction signées sous le format de texte sont transmises du système informatique de service au système informatique de fournisseur d'identification (136) par le biais du système informatique d'utilisateur (100) sur le réseau, où les données de transaction sont signées par le système informatique de fournisseur d'identification et les données de transaction signées par le système informatique de fournisseur d'identification sont transmises au système informatique d'utilisateur, où la génération du deuxième numéro de transaction n'a lieu que lorsque les données de transaction reçues par le système informatique de fournisseur d'identification correspondent aux données de transaction reçues par le système informatique de service.

7. Procédé selon l'une des revendications précédentes, dans lequel l'authentification de l'utilisateur vis-à-vis du jeton d'identification a lieu en raison de l'exécution d'un échange de clés de Diffie-Hellman, où une clé publique éphémère est dérivée, où la génération du deuxième numéro de transaction a lieu par le lecteur, en ce que la clé publique éphémère est employée pour l'exécution du procédé cryptographique et où la clé publique éphémère est lue par le système informatique de fournisseur d'identification à partir du jeton d'identification par le biais du réseau avec un cryptage de bout en bout, afin de générer le premier numéro de transaction à l'aide de la clé publique éphémère.

8. Procédé selon la revendication 7, dans lequel l'échange de clés de Diffie-Hellman a lieu dans le cadre du protocole d'établissement de connexion par authentification de mot de passe PACE.

9. Procédé selon l'une des revendications précédentes 1 à 8, dans lequel le système informatique de fournisseur d'identification envoie une commande APDU pour la lecture de l'attribut ou des attributs par le biais du système informatique d'utilisateur et le lecteur l'envoie au jeton d'identification et le lecteur utilise le contenu crypté de la réponse APDU délivrée ensuite par le jeton d'identification pour la génération du deuxième numéro de transaction.

10. Procédé selon les revendications 7, 8 ou 9, dans lequel le lecteur a un affichage par lequel le deuxième numéro de transaction est délivré.

11. Procédé selon l'une des revendications 1 à 6, dans lequel la génération du deuxième numéro de transaction a lieu par le jeton d'identification et le jeton d'identification a un affichage pour l'édition du deuxième numéro de transaction.

12. Procédé selon la revendication 11, dans lequel une clé du cryptage de bout en bout, et/ou un identifieur restreint généré par le jeton d'identification, et/ou au moins une partie des données de transaction sous le format de texte, et/ou un texte chiffré des données de transaction sont impliqués dans le procédé cryptographique afin de générer le deuxième numéro de transaction.

13. Procédé selon l'une des revendications précédentes, avec les étapes suivantes
- l'établissement d'une première session (201) entre un programme d'application (112), en particulier, un navigateur internet du système informatique d'utilisateur, et un système informatique de service (150) par le biais d'un réseau (116),
- la réception de la demande de transaction (158) par le biais de la première session par le système informatique de service à partir du programme d'application (112),
- la génération de la requête (166) par le système informatique de service en raison de la réception de la demande de transaction, où la requête est signée par le système informatique de service et la requête contient une spécification d'attributs de l'au moins un attribut à lire à partir du jeton d'identification pour l'exécution de la transaction, de données de transaction pour la spécification de la transaction, une identification (180) de la requête, un localisateur uniforme de ressources URL du système informatique de fournisseur d'identification et un URL du système informatique de service,
- l'établissement d'une deuxième session entre le navigateur internet et le système informatique de fournisseur d'identification par le biais du réseau à l'aide de l'URL du système informatique de fournisseur d'identification, où la deuxième session est établie avec une couche transport sécurisée,
- la poursuite de la transmission de la requête et d'un texte chiffré des données de transaction du navigateur internet vers le système informatique de fournisseur d'identification par le biais de la deuxième session, où le texte chiffré est dérivé par une fonction unidirectionnelle à partir des données de transaction,
- l'établissement de la troisième session entre un programme du système informatique d'utilisateur et le système informatique de fournisseur d'identification par le biais de la couche transport sécurisée de la deuxième session, où le programme est différent du navigateur internet,
- la transmission d'au moins un certificat du programme informatique de fournisseur d'identification au programme, où le certificat contient une indication de droits en lecture du système informatique de fournisseur d'identification pour la lecture d'un ou de plusieurs attributs stockés dans le jeton d'identification, où la transmission du certificat a lieu par le biais de la troisième session,
- la vérification, par le programme, si les droits en lecture indiqués dans le certificat sont suffisants pour permettre un accès en lecture du système informatique de fournisseur d'identification sur l'attribut ou les attributs à lire selon la spécification d'attributs, et uniquement si les droits de lecture sont suffisants :
a) l'établissement d'une connexion locale (176) entre le lecteur du système informatique d'utilisateur et le jeton d'identification,
b) l'authentification de l'utilisateur vis-à-vis du jeton d'identification, où une clé de session est convenue,
c) l'établissement d'une quatrième session (204) entre le jeton d'identification et le système informatique de fournisseur d'identification par le biais de la connexion locale et de la troisième session avec un cryptage de bout en bout à l'aide de la clé de session,
d) l'authentification réciproque du jeton d'identification et du système informatique de fournisseur d'identification par le biais de la quatrième session,
e) la lecture de l'attribut ou des attributs selon la spécification d'attributs par le système informatique de fournisseur d'identification à partir du jeton d'identification par le biais de la quatrième session,
- la génération de la réponse (174) qui contient l'attribut ou les attributs lus, le premier numéro de transaction et au moins l'identifiant (180) de la requête et qui est signée par le système informatique de fournisseur d'identification,
- le stockage de la réponse pour la consultation à l'aide de l'adresse logique,
- la lecture de la réponse provenant du système informatique de fournisseur d'identification par le système informatique d'utilisateur par la consultation de la réponse au moyen d'une commande de lecture de l'adresse logique par le biais du réseau,
- la poursuite de la transmission de la réponse par le système informatique d'utilisateur par le biais de la première session au système informatique de service,
- l'association de la réponse à la requête à l'aide de l'identifiant qui est contenu dans la réponse par le système informatique de service,
- l'exécution de la transaction à l'aide de la réponse par le système informatique de fournisseur d'identification.

14. Procédé selon la revendication 13, dans lequel, dans le cas de la clé du cryptage de bout en bout, il s'agit d'une clé de session, où, pour la génération des premier et deuxième numéros de transaction, la clé de session est employée à l'aide du procédé cryptographique.

15. Procédé selon la revendication 13 ou la revendication 14, dans lequel, dans le cas du programme d'application, il s'agit d'un navigateur internet, et l'autre programme est un module d'extension du navigateur 'internet, où le module d'extension est enregistré dans un registre d'un système d'exploitation du système informatique d'utilisateur avec un identifiant de module d'extension (184), où le message du système informatique de fournisseur d'identification vers le navigateur internet contient l'identifiant de module d'extension de sorte que le module d'extension est démarré en raison de la réception du message.

16. Procédé selon la revendication 13 ou la revendication 14, dans lequel, dans le cas du programme, il s'agit d'un nouveau programme d'application, lequel peut être démarré par le navigateur internet d'un URL local, où l'URL local contient un numéro de port bien défini selon le protocole de contrôle de transmission TCP, où l'URL local est transmis au système informatique d'utilisateur conjointement avec la page web à partir du système informatique de service afin de provoquer le démarrage du nouveau programme d'application à l'aide de l'URL local par le navigateur internet.

17. Procédé selon l'une des revendications précédentes, dans lequel, dans le cas du jeton d'identification, il s'agit d'un document de valeur ou de sécurité, ceci signifie en particulier un document d'identité, ceci signifie un document d'identification, en particulier, une carte d'identité personnelle électronique, un passeport, un permis de conduire, une carte d'entreprise ou un moyen de paiement, comme, par exemple, une carte de crédit ou un autre document d'autorisation, comme, par exemple, une carte d'entrée, un titre de transport ou un visa, en particulier une carte à puce, en particulier, dotée d'une interface RFID et/ou NFC.

18. Système informatique avec un système informatique de service (150), un système informatique d'utilisateur (100), un système informatique de fournisseur d'identification (136) et un jeton d'identification (106), qui est associé à un utilisateur (102), où le jeton d'identification présente une mémoire électronique (118) avec une zone de mémoire (124) sécurisée dans laquelle sont stockés un ou plusieurs attributs, où un accès à la zone de mémoire sécurisée est possible uniquement par le biais d'un processeur (128) du jeton d'identification et où le jeton d'identification présente une interface de communication (108) pour la communication avec un lecteur d'un système informatique d'utilisateur (100),
dans lequel le système informatique de service, le système informatique d'utilisateur, le système informatique de fournisseur d'identification et le jeton d'identification sont prévus pour l'exécution des étapes suivantes :
- la transmission d'une demande de transaction (158) du système informatique d'utilisateur vers un système informatique de service (150) par le biais d'un réseau (116),
- la transmission d'une requête (166) du système informatique de service à un système informatique de fournisseur d'identification (136) par le biais du système informatique d'utilisateur (100),
où la transmission a lieu par le biais du réseau, où la requête contient une spécification d'attributs des attributs à lire à partir du jeton d'identification pour l'exécution de la transaction,
- l'authentification de l'utilisateur vis-à-vis du jeton d'identification,
- l'authentification du système informatique de fournisseur d'identification vis-à-vis du jeton d'identification par le biais du réseau,
- à la condition d'une authentification réussie de l'utilisateur et du système informatique de fournisseur d'identification vis-à-vis du jeton d'identification, la lecture de l'attribut ou des attributs selon la spécification d'attributs par le système informatique de fournisseur d'identification à partir du jeton d'identification par le biais du réseau avec un cryptage de bout en bout,
- la génération d'un premier numéro de transaction pour la transaction par le système informatique de fournisseur d'identification à l'aide d'un procédé cryptographique,
- la transmission d'une réponse (174) du système informatique de fournisseur d'identification au système informatique de service par le biais du système informatique d'utilisateur, où la transmission de la réponse a lieu par le biais du réseau, où la réponse contient l'attribut ou les attributs lus et le premier numéro de transaction, et où la réponse est signée par le système informatique de fournisseur d'identification,
- le stockage du premier numéro de transaction généré par le système informatique de fournisseur d'identification dans une mémoire par le système informatique de service,
- la génération d'un deuxième numéro de transaction pour la transaction par le système informatique d'utilisateur, le lecteur ou le jeton d'identification à l'aide du même procédé cryptographique,
- la transmission du deuxième numéro de transaction du système informatique d'utilisateur au système informatique de service (150) par le biais du réseau (116),
- la lecture du premier numéro de transaction à partir de la mémoire par le système informatique de service,
- la vérification de la concordance des premier et deuxième numéros de transaction par le système informatique de service,
- à la condition que les premier et deuxième numéros de transaction correspondent, l'exécution de la transaction à l'aide des données de transaction et de l'attribut ou des attributs par le système informatique de service.
